# EUROPEAN PATENT SPECIFICATION

(11) **EP 0 757 782 B1**
(45) Date of publication and mention of the grant of the patent: **11.06.2003**
(21) Application number: 95918855.8
(22) Date of filing: 18.04.1995
(51) Int. Cl.: G01F 1/84

(54) **CORIOLIS MASS FLOW RATE METER**
CORIOLIS-MASSENDURCHFLUSSMESSER
DEBITMETRE MASSIQUE DE CORIOLIS

(30) Priority: 26.04.1994 US 233687
(43) Date of publication of application: 12.02.1997
(60) Divisional application: 98201112.4
(73) Proprietor: DIRECT MEASUREMENT CORPORATION, Longmont, CO 80501 (US)
(72) Inventor: CAGE, Donald, R., Longmont, CO 80501 (US); CAMPBELL, Steven, W., Longmont, CO 80504 (US); HAHN, David, T., Longmont, CO 80501 (US)
(74) Representative: Jackson, Richard Eric
(86) International application number: PCT/US95/05161
(87) International publication number: WO 95/029386

(56) References cited:
- EP-A- 0 253 504
- EP-A- 0 282 217
- EP-A- 0 316 908
- WO-A-92/14123
- MEASUREMENTS, vol. 9, no. 4, October 1991 - December 1991 LONDON GB, pages 176-180, XP 000277390 F.CASCETTA 'A new straight pipe Coriolis mass flowmeter: the experimental characterisation'
- PATENT ABSTRACTS OF JAPAN vol. 7 no. 274 (P-241) [1419] ,7 December 1983 & JP,A,58 153121 (TAKAHARU MATSUMOTO) 12 September 1983,

## Description

### CROSS REFERENCE TO RELATED APPLICATIONS

This is a continuation-in-part of Serial No. 07/843,519, filed on May 8, 1992, and entitled "Improved Coriolis Mass Flow Meter," a continuation-in-part of Serial No. 07/651,301, filed on February 5, 1991, and entitled "Single Path Radial Mode Coriolis Mass Flow Meter," both of which are commonly assigned with the present invention and are incorporated herein by reference.

### TECHNICAL FIELD OF THE INVENTION

This invention relates to Coriolis mass flow rate meters and, in particular, to Coriolis mass flow rate meters that are insertable in a single straight flow conduit to measure mass flow rate.

### BACKGROUND OF THE INVENTION

In the art of Coriolis mass flow rate meters it is well known that a vibrating flow conduit carrying mass flow causes Coriolis forces which deflect the flow conduit away from its normal vibration path proportionally related to mass flow rate. These deflections or their effects can then be measured as an accurate indication of mass flow rate.

This effect was first made commercially successful by Micro Motion Inc. of Boulder Colorado. Early designs employed a single vibrating U-shaped flow conduit which was cantilever mounted from a base. With nothing to counter-balance the vibration of the flow conduit, the design was highly sensitive to mounting conditions and so was redesigned to employ another mounted vibrating arrangement which acted as a counter-balance for the flow conduit similar to that disclosed in their U.S. Patent Nos. RE-31,450 and 4,422,338 to Smith. Problems occurred however since changes in the specific gravity of the process-fluid were not matched by changes on the counter-balance, an unbalanced condition could result causing errors. Significant improvement was later made by replacing the counter-balance arrangement by another U-shaped flow conduit identical to the first and splitting the flow into parallel paths, flowing through both conduits simultaneously. This parallel path Coriolis mass flow rate meter (U.S. Patent No. 4,491,025 to Smith et al.) solves this balance problem and has thus become the premier method of mass flow measurement in industry today.

Many other flow conduit geometries have been invented which offer various performance enhancements or alternatives. Examples of different flow conduit geometries are the dual S-tubes of U.S. Patent Nos. 4,798,091 and 4,776,220 to Lew, the omega shaped tubes of U.S. Patent No. 4,852,410 to Corwon et al., the B-shapes tubes of U.S. Patent No. 4,891,991 to Mattar et al., the helically wound flow conduits of U.S. Patent No. 4,756,198 to Levien, figure-8 shaped flow conduits of U.S. Patent No. 4,716,771 to Kane, the dual straight tubes of U.S. Patent No. 4,680,974 to Simonsen et al. and others. All of these geometries employ the basic concept of two parallel flow conduits vibrating in opposition to one another to create a balanced resonant vibrating system.

Although the parallel path Coriolis mass flow rate meter has been a tremendous commercial success, several problems remain. Most of these problems are a consequence of using flow splitters and two parallel flow conduits in order to maintain a balanced resonant system. In addition, most designs employ flow conduits that are curved into various shapes as previously described to enhance the sensitivity of the device to mass flow rate. These two common design features cause a number of problems which preclude the use of Coriolis technology in many applications that would benefit from its use.

Among the problems caused by the flow splitters and curved flow conduits are: (1) excessive fluid pressure-drop caused by turbulence and drag forces as the fluid passes through the flow splitters and curves of the device, (2) difficulty in lining or plating the inner surface of geometries having flow splitters and curved flow conduits, with corrosive resistant materials, (3) inability to meet food and pharmaceutical industry sanitary requirements such as polished surface finish, non-plugable, self-draining, and visually inspectable, (4) difficulty in designing a case to surround dual curved flow conduits which can contain high rated pressures, (5) difficulty in designing flow meters for 15cm (6") diameter and larger pipelines and (6) difficulty in reducing the cost of current designs due to the added value of flow splitters, dual flow conduits and curved flow conduit fabrication.

It is therefore recognized that a Coriolis mass flow rate meter employing a single straight flow conduit would be a tremendous advancement in the art.

Serial No. 07/651,301, filed on February 5, 1991, and entitled "Single Path Radial Mode Coriolis Mass Flow Meter," is directed to a meter employing a single straight flow conduit designed to be vibrated in a radial mode to thereby provide a means by which to measure mass flow rate of fluids within the conduit. Serial No. 07/843,519, filed on May 8, 1992, entitled "Improved Coriolis Mass Flow Meter" and a continuation-in-part of Serial No. 07/651,301 is directed, inter alia, to a mass flow meter capable of measuring pressure and viscosity of the fluid within the conduit and to an alternative construction of a mass flow meter employing a vibrating surface on an otherwise rigid conduit to measure mass flow and other fluid attributes.

What is still needed in the art is a torpedo-type device that is insertable into a conduit to allow measurement of mass flow and other attributes of a fluid within the conduit.

### SUMMARY OF THE INVENTION

According to the object of the present invention, an apparatus for measuring attributes of a fluid taking advantage of the Coriolis principle is provided. The apparatus comprises: (1) a body capable of being inserted into and surrounded by the fluid, (2) means (in a preferred embodiment, an actuator), disposed within the body, for vibrating a surface of the body in a radial mode of vibration, the vibrating surface developing Coriolis forces within the fluid, (3) means (in a preferred embodiment, a detector), coupled to the surface, for measuring motion of the surface, the motion being a function of Coriolis forces developed in the fluid and (4) means (in a preferred embodiment, a circuit), coupled to the measuring means, for determining an attribute of the fluid as a function of the motion of the surface.

A further object of the present invention is to provide an apparatus wherein the vibrating means vibrates the surface in two radial modes of vibration.

A further object of the present invention is to provide an apparatus wherein the measuring means measures a change in phase of the motion of the surface.

A further object of the present invention is to provide an apparatus wherein the measuring means measures a change in amplitude of the motion of the surface.

A further object of the present invention is to provide an apparatus wherein the body is elongated and the fluid flows along a longitudinal axis of the body.

A further object of the present invention is to provide an apparatus wherein the body is elongated and the fluid flows along a transverse axis of the body.

A further object of the present invention is to provide an apparatus wherein the apparatus is disposed within a conduit, the fluid is capable of being disposed between the apparatus and the conduit and the means for measuring is coupled to the conduit.

A further object of the present invention is to provide an apparatus further comprising means for vibrating the conduit.

A further object of the present invention is to provide an apparatus further comprising means for sensing a change in motion of the conduit.

A further object of the present invention is to provide an apparatus wherein the attribute is any one or more of the following attributes: a mass flow rate, a pressure, a density and a viscosity of the fluid. Throughout the following discussion, reference is made to a meter for measuring mass flow. Those ordinarily skilled in the art should understand that pressure, density, viscosity or other attributes of the fluid are readily ascertainable by the same structure and function and that ascertainment of these other attributes is within the scope of the present invention.

The apparatus herein uses a single straight flow conduit and a unique vibration method, thereby eliminating the problems caused by flow splitters and curved flow conduits while retaining the current advantages of balance and symmetry.

The basic operation of a commercially available Coriolis mass flow rate meter according to current art will now be described. Normally two process-fluid filled flow conduits are employed in a parallel-path or serial-path configuration. The two flow conduits form a balanced resonant system and as such are forced to vibrate in a prescribed oscillatory bending-mode of vibration. If the process-fluid is flowing, the combination of fluid motion and conduit vibration causes Coriolis forces which deflect the conduits away from their normal (no flow) paths of vibration proportionally related to mass flow rate. These deflections, or their effects, are then measured as an accurate indication of mass flow rate.

As previously described, only one flow conduit is necessary for measuring mass flow rate in this manner. However, to achieve the superior performance afforded by a balanced resonant system, it is necessary to counter-balance the reaction forces from the forced vibration, thus a second flow conduit is normally employed. For very small meter designs the mass and stiffness properties of the mounting conditions can be sufficiently great to counteract the reaction forces from the forced vibration thereby allowing the use of only one flow conduit. Accordingly, Micro Motion Inc. presently offers only their two smallest flow meters, the model D6 (1.6mm (1/16") line size) and the model D12 (3.2mm (1/8") line size) in a single curved flow conduit configuration.

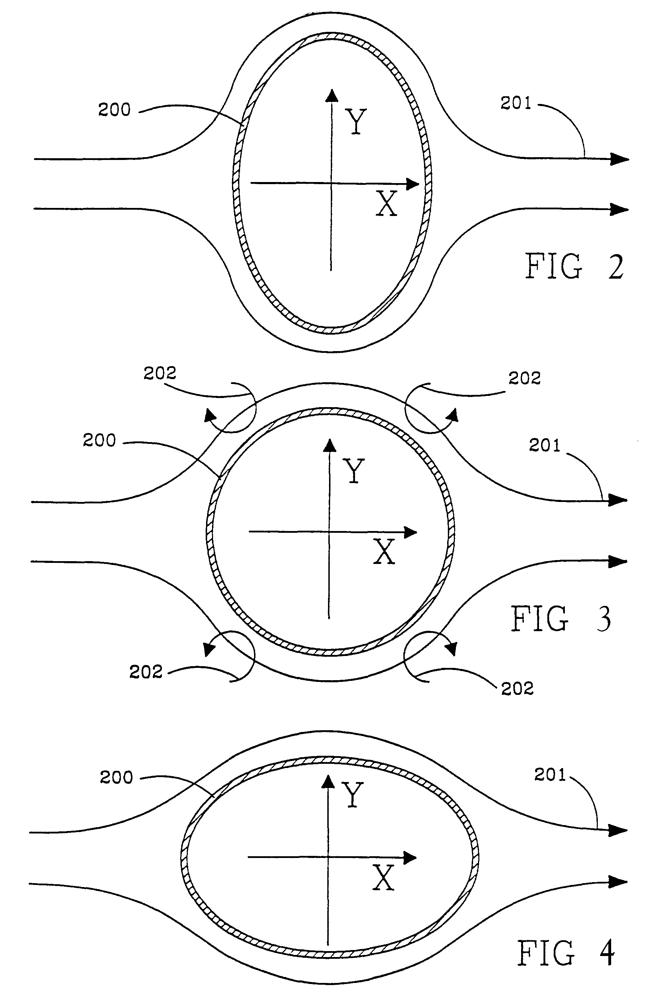

A single straight flow conduit while solving the aforementioned problems caused by flow splitters and curved conduits, has therefore not been commercially successful in Coriolis mass flow rate meter designs, especially for large flow conduits. This failure is due to the inherent imbalance of a single straight flow conduit in any natural bending-modes of vibration. A straight flow conduit fixedly mounted at both ends has a number of natural bending-modes of vibration wherein the center-line of the conduit deflects or rotates away from its rest position in a number of half sine-shaped waves along the length of the conduit. Higher frequency bending-modes involve increasing numbers of these half sine-shaped waves in integer multiples. Each of these bending-modes causes reaction forces applied to the conduit mounts creating balance and accuracy problems analogous to the single curved flow conduit models previously described. A single straight tube design of this nature is disclosed in U.S. Patent No. 4,823,614 to Dahlin, in which the flow tube cross-section is permanently deformed in several locations as shown in its FIGURES 2A-2D to enhance its bending in a "higher-mode" such as its FIGURE 3B. The higher modes of vibration as shown in the Dahlin patent FIGURES 3A-3E all show the flow conduit bending away from a straight line at its ends which will cause reaction torques and forces at the mounts. These reactions are not counter-balanced and thus can create reaction forces as previously described. Dahlin states that this embodiment can be used in "average" sized pipes with average being defined as 12.7mm to 19.1mm (1/2 to 3/4 inch) inside diameter. Although the reason for this size restriction is not explained, it is probably a consequence of imbalance from using a bending-mode of vibration with no counter-balance apparatus.

The unique advantages of the present invention accrue from the use of a single straight flow conduit in a radial-mode of vibration instead of a bending-mode as is currently used in the art. For clarity, the term "bending-mode" is defined as a vibration mode wherein the center-line or axis of the flow conduit translates and/or rotates away from its rest position in an oscillatory manner while the cross-sectional shape of the flow conduit remains essentially unchanged. By contrast, the term "radial-mode" is defined as a vibration mode wherein the center-line or axis of the flow conduit remains essentially unchanged while all or a part of the wall of the flow conduit translates and/or rotates away from its rest position in an oscillatory manner. Common examples of radial-modes of vibration are the natural vibration of a bell or wine glass. In these two examples the fundamental radial-mode of vibration causes the normally round cross-sectional shape of the free end of the bell or wine glass to deflect into an oscillating elliptical shape. Since the center-line or axis of this radial-mode stays essentially unchanged, the stem (in the wine glass example) can be held without feeling or interfering with the vibration, exemplifying the absence of reaction forces at the mount. Applying this idea to the flow conduit of a Coriolis mass flow rate meter, a single straight flow conduit is employed, fixedly attached at both ends, and vibrated in a radial-mode of vibration where the wall of the flow conduit translates and/or rotates away from its rest position in an oscillatory manner, and the center-line of the flow conduit remains essentially unchanged. The combination of fluid motion and radial-mode vibration causes a Coriolis force distribution along the moving wall of the flow conduit which alters the cross-sectional shape of the conduit as a function of mass flow rate. This altered shape or its effects, are then measured as an accurate indication of mass flow rate. Since this radial mode of vibration causes substantially no net reaction forces where the conduits are mounted, a balanced resonant system Coriolis mass flow rate meter is thereby created with no flow splitters, curved flow conduits, or counter-balance devices.

In addition, a unique non-intrusive method is employed to determine the pressure and the density of the fluid inside the flow conduit by simultaneously vibrating the flow conduit in two modes of vibration. The values of the frequencies of the two modes of vibration are functionally related to both the fluid density and the pressure difference between the inside and the outside of the flow conduit.

Due to the unique operation of the invention, and its ability to directly measure mass flow rate, fluid density, temperature and pressure, virtually any defined static or dynamic fluid parameter can be calculated such as fluid state, viscosity, quality, compressibility, energy flow rate, net flow rate, etc.

As an alternate to using a radial-mode of vibration involving the entire wall of the flow conduit as previously described, a portion of the flow conduit perimeter can be vibrated as necessary to generate Coriolis forces. This method is well suited for use in flow conduits of very large size and non-circular shapes where vibration of the entire conduit is not practical. This method is also well suited to flow conduits formed into bulk materials thus having several rigid sides incapable of entire-perimeter radial mode vibration, such as a flow conduit etched into silicon or quartz to form a micro flow meter.

The present invention solves the previously mentioned problems caused by flow splitters, curved flow conduits and imbalance and allows Coriolis mass flow meter technology to be used in areas such as sanitary applications, gas flow, air flow meters for weather stations, airplanes, low pressure air-duct systems, micro flow meters, liquid flow meters for residential, industrial, oceanographic and shipboard use, and many more.

A preferred embodiment of the present invention is a system for processing fluids comprising: (1) an apparatus for measuring an attribute of a fluid in a flow conduit comprising: (1a) an elongated body capable of being inserted into and surrounded by the fluid, (1b) means, disposed within the body, for vibrating a surface of the body in a radial mode of vibration, the vibrating surface developing Coriolis forces within the fluid, (1c) means, coupled to the surface, for measuring motion of the surface, the motion being a function of Coriolis forces developed in the fluid and (1d) means, coupled to the measuring means, for determining an attribute of the fluid as a function of the motion of the surface, (2) a conduit surrounding the apparatus, the fluid capable of being disposed between the apparatus and the conduit and the means for measuring coupled to the conduit and (3) means for vibrating the conduit to thereby allow the system to measure the attribute, the attribute being selected from the group consisting of: (3a) mass flow rate, (3b) pressure, (3c) density and (3d) viscosity of the fluid.

The foregoing has outlined rather broadly the features and technical advantages of the present invention in order that the detailed description of the invention that follows may be better understood. Additional features and advantages of the invention will be described hereinafter which form the subject of the claims of the invention. Those skilled in the art should appreciate that the conception and the specific embodiment disclosed may be readily utilized as a basis for modifying or designing other structures for carrying out the same purposes of the present invention. Those skilled in the art should also realize that such equivalent constructions do not depart from the spirit and scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 is a preferred embodiment which can be used as an insertion type device;
FIGURE 2 is a cross sectional view of a flow tube showing the flow tube at its peak deflection in the Y direction;
FIGURE 3 is a cross sectional view of a flow tube showing the flow tube as it passes through its normally undeflected position
FIGURE 4 is a cross sectional view of a flow tube showing the flow tube at its peak deflection in the X direction;
FIGURE 5 is a cross sectional view of a flow tube showing the distribution of Coriolis forces around the outside of the flow tube;
FIGURE 6 is a cross sectional view of a flow tube showing the deflection that would result from the distribution of Coriolis forces shown in FIGURE 5;
FIGURE 7 is a cross sectional view of a flow tube showing the deflection that would result from the distribution of Coriolis forces shown in FIGURE 5;
FIGURE 8 is a cross sectional view of an alternate embodiment of the device;
FIGURE 9 is an axial view of the embodiment of FIGURE 8;
FIGURE 10 is a cross sectional view of the embodiment of FIGURE 8;
FIGURE 11 is a drawing of the velocity profile and rotational velocity distribution for a flow tube operating in a bending mode of vibration;
FIGURE 12 is a drawing of the velocity profile and rotational velocity distribution for a flow tube operating in a radial mode of vibration;
FIGURE 13 is a drawing of two possible velocity profiles of fluid flowing in a tube;
FIGURE 14 is a drawing of two possible angular rotation distributions of fluid flowing in a tube, caused by two different radial modes of vibration;
FIGURE 15 is a drawing of four different Coriolis force distributions that could result from the combination of velocity profiles and angular rotations shown in FIGURES 13 and 14;
FIGURE 16 is the embodiment of FIGURE 1 mounted within a pipe;
FIGURE 17 is an embodiment including a stationary flow conditioner;
FIGURE 18 is the embodiment of FIGURE 17 including a dynamic flow conditioner;
FIGURE 19 is the embodiment of FIGURE 16 including a pressure tight case and an active outer pipe;

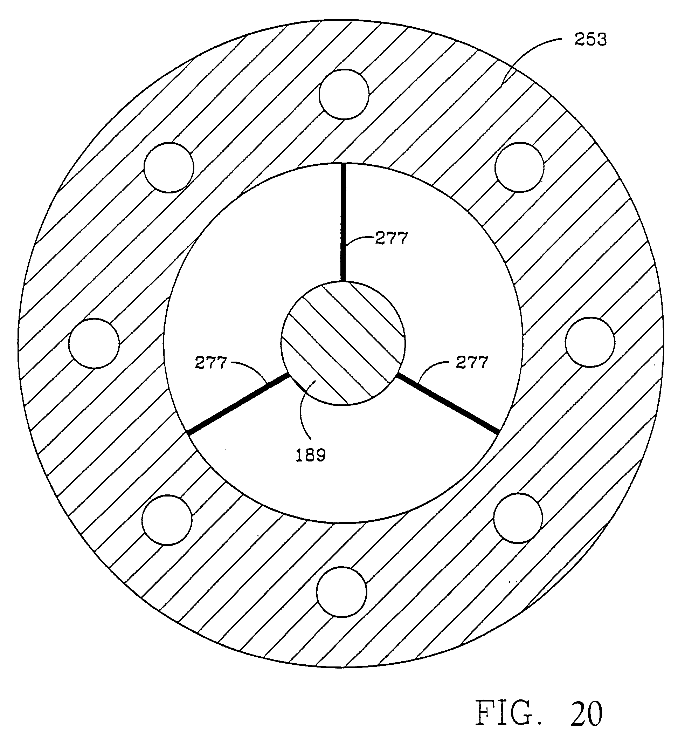

FIGURE 20 is an axial view of the embodiment of FIGURE 19;
FIGURE 21 shows a Coriolis mass flow meter employing a plurality of motion detectors, vibration isolation means, and axial stress reduction means;
FIGURE 22 is a block diagram of one possible configuration of circuit components used to measure the mass flow rate of fluid and other parameters according to the present invention;
FIGURE 23 is a representation of various wave forms that can be attained at various points in the circuit of FIGURE 22;
FIGURE 24 is a graph of one possible functional relationship between flow conduit vibration frequency and process fluid pressure, for both the primary and secondary vibration modes, for the mass flow meter of FIGURE 21;
FIGURE 25 is a graph of one possible functional relationship between flow conduit vibration frequency and process fluid density, for both the primary and secondary vibration modes, for the mass flow meter of FIGURE 21; and
FIGURE 26 is a graph of one possible functional relationship between flow conduit vibration frequency and process fluid temperature, for both the primary and secondary vibration modes, for the mass flow meter of FIGURE 21.

### DETAILED DESCRIPTION OF THE INVENTION

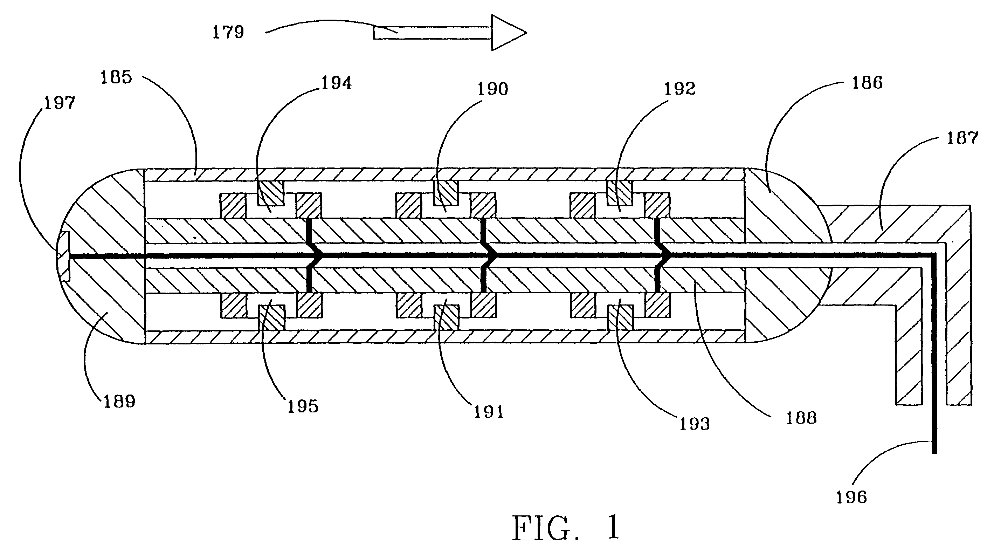

FIGURE 1 is an embodiment of a Coriolis mass flow meter. The principle advantage of the embodiment of FIGURE 1 derives from the arrangement of a radially vibrating, axially symmetric closed surface 185 which is disposed in flowing fluid 179 such that the flow is parallel with the axis of surface 185, and flows over the outside of said surface. In this arrangement increasing fluid pressure surrounding the outside of surface 185 puts compressive stresses onto surface 185 which in turn increases the devices sensitivity to flow rate as pressure increases. This phenomenon is reversed from that of other embodiments with fluid flowing inside of a flow conduit. In addition, the change in the natural frequency as a function of pressure is also reversed in this arrangement since increasing exterior pressure around surface 185 will in turn cause a decrease in the natural frequency of the driven radial vibration. This effect can be advantageously applied for determination of pressure and density. Embodiments previously described with fluid flowing inside of a flow conduit, present the designer with a tradeoff between sensitivity and pressure rating since higher internal pressures will require thicker tube walls and will induce higher tensile stresses both of which reduce the sensitivity of the device to measuring flow rate. Using the embodiment of FIGURE 1, this phenomenon is reversed allowing the designer to advantageously design a device which actually improves its sensitivity to flow rate and pressure measurement as fluid pressure increases.

Surface 185 is preferably a cylindrical surface such as a tube or pipe made of a strong flexible material such as stainless steel, titanium, quartz, etc., although non-circular cross sectional shapes are also anticipated. The inside of surface 185 is instrumented with magnets while mounting bracket 188 is instrumented with coils forming magnet/coil pairs 190 through 195 which can excite or sense vibrations in surface 185 as previously described for other embodiments. Mounting bracket 188 can be attached at one or both of its ends to end caps 189 and/or 186, where attachment at only one end, or attachment through a flexible or slip type joint (bellows) eliminates any stresses along surface 185 due to any temperature difference between surface 185 and bracket 188. Surface 185 is rigidly mounted at its ends to end caps 189 and 186 which can be aerodynamically or hydrodynamically designed to enhance flow characteristics. Temperature sensor 197 is mounted in association with end cap 189 to monitor the temperature of flowing fluid 179, or can be mounted directly on surface 185 to monitor its temperature for compensation of elastic modulus changes. Signal carrier 196 conveys electrical signals between temperature sensor 197, magnet/coil pairs 190 through 195, and the signal processing electronics (not shown). Bracket 187 is used to mount the device and to protect signal carrier 196.

The annular space between mounting bracket 188 and surface 185 is preferably evacuated to a vacuum, or filled with a known amount of gas such as argon or nitrogen. There are two main methods of operation of the embodiment of FIGURE 1 which differ from each other depending on the chosen type of signal processing. Each signal processing technique has its own advantages thereby allowing the designer to choose the appropriate one based on specific design requirements.

The first method described employs a phase or time measurement technique for signal processing. In this method, magnet/coil pairs 190 and 191 would be electrically excited to produce at least one and preferably two radial modes of vibration on surface 185. With flowing fluid 179 going over the outside of surface 185, a Coriolis force distribution would result as surface 185 passes through its normally circular cross sectional shape. Magnet/coil pairs 194 and 195 would then sense a change in the vibratory motion of surface 185 said change being a shift in its time or phase relationship to the motion sensed by Magnet/coil pairs 192 and 193. Means for measuring the time or phase relationship change (not shown) between these two motions would then be employed to create a signal proportional to the rate of flowing fluid 179, functionally related to this time or phase relationship. Surface 185 can be excited in multiple modes of vibration and the changes in frequencies evaluated to thereby determine the density and the pressure of flowing fluid 179. In addition, as previously described for other embodiments, the power required to maintain the vibration of surface 185 is a function of the viscosity of flowing fluid 179. Therefore by measuring this power, a signal can be created proportional to fluid viscosity which can be used by the customer.

The second method of operation of the embodiment of FIGURE 1 involves the use of an amplitude measurement technique for signal processing. In this method, magnet/coil pairs 190 and 191 would be electrically excited as previously described to produce at least one and preferably two radial modes of vibration on surface 185. With flowing fluid 179 going over the outside of surface 185, a Coriolis force distribution would result as surface 185 passes through its normally circular cross sectional shape. The resulting deflection of surface 185 from this Coriolis force distribution results in a change in the amplitude of the motion sensed by the upstream magnet/coil pairs 194, 195 versus the downstream magnet/coil pairs 192, 193. Since the phase of the motion sensed by magnet/coil pairs 194, 195 and 192, 193 is directly in phase for the driven motion, and directly out of phase for the flow induced motion, by subtracting the signals sensed by the upstream magnet/coil pairs 194, 195 from those of the downstream magnet/coil pairs 192, 193, the resultant detected driven motion will be canceled out leaving a signal that is 2 times the Coriolis induced motion, which is proportional to flow rate. This change in the amplitude measurement technique has several unique advantages over a change in the phase measurement techniques including designs using higher frequencies of vibration since higher frequencies generate larger signals in the magnet coil pickoffs, and in general customers of this technology prefer shorter tube designs which will cause higher frequencies. In addition, by increasing the amplitude of the driven motion, more Coriolis induced deflection is generated allowing for larger amplitude signals to be measured. By contrast, increasing the driven amplitude has no effect on the amount of phase or time delay generated by a given design. In addition, for certain driven modes of vibration there will be places on the tube where phase is invariant with flow rate thereby requiring the use of an amplitude type measurement technique to extract the flow rate information. For example, a mode shape can be excited and used as the driven radial mode on surface 185 of FIGURE 1 by electrically exciting magnet/coil pairs 194, 195 and 192, 193 in the appropriate phases. In this case the center of the tube (magnet/coil pairs 190 and 191) would not translate during this driven vibration and no fluid flow. With increasing flowing fluid 179, a Coriolis force distribution will result causing deflections at the center of the tube proportional to flow rate, which will be sensed by magnet/coil pairs 190 and 191. These induced signals will be either 0° or 180° phase relationship depending on the direction of flowing fluid 179, and will not appreciably phase shift with changes in the magnitude of the flow rate. As will be described for other embodiments, surface 185 can be excited in multiple modes of vibration and the changes in frequencies evaluated to thereby determine the density and the pressure of flowing fluid 179. In addition, as will be described for other embodiments, the power required to maintain the vibration of surface 185 is a function of the viscosity of flowing fluid 179. Therefore by measuring this power, a signal can be created proportional to fluid viscosity which can be used by the customer.

As an alternate method, surface 185 can be driven in a radial mode of vibration as just described by electrically exciting magnet/coil pairs 194, 195 and 192, 193 in the appropriate phases resulting in a driven mode shape. In this case, dual windings are employed on the coils of magnet/coil pairs 194, 195 and 192, 193, with one winding being used for driving the motion, and the other winding being used for sensing the motion. The sensing coils can then be added together as previously described to cancel the sensed driven motion and create a resultant signal that is 2 times the induced Coriolis deflection which in turn is proportional to flow rate. This arrangement eliminates the need for magnet/coil pairs 190 and 191 thereby reducing complexity and cost.

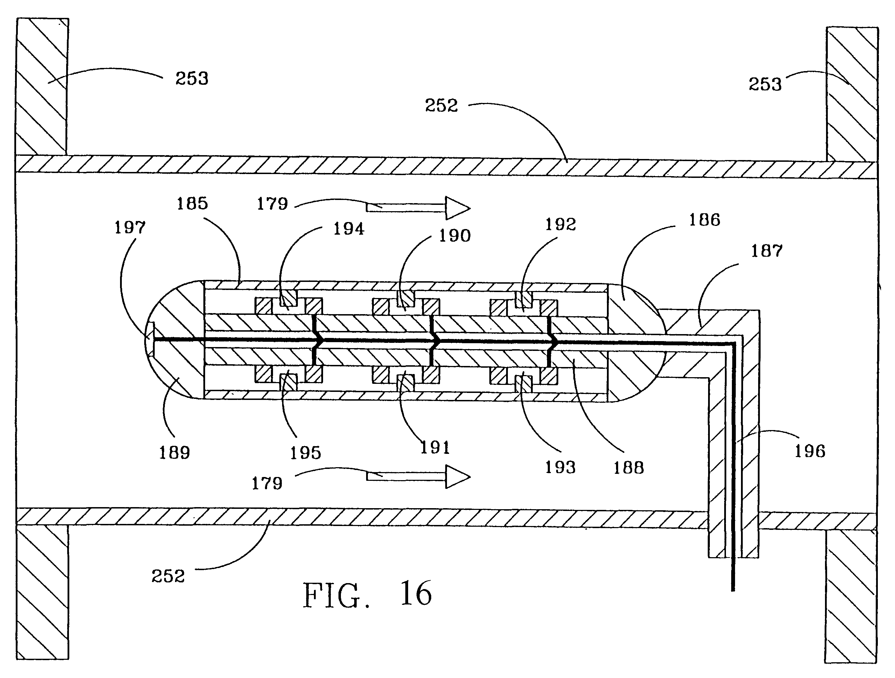

In addition to the advantages previously described pertaining to the embodiment of FIGURE 1, further advantages occur when this embodiment is mounted within a flow conduit. FIGURE 16 shows the embodiment of FIGURE 1 mounted within pipe 252 which includes pipe connections 253 at its ends thereby forming a short "spool-piece" which can easily be mounted in a pipe line. In this arrangement flowing fluid 179 passes in the annular space between surface 185 and pipe 252. This arrangement has the advantageous characteristics of reducing velocity profile effect, reducing the power required to measure a given size fluid stream, greatly increases the practical size limit for which this technology can be used, and eliminates pipeline induced stresses, as will later be described in detail.

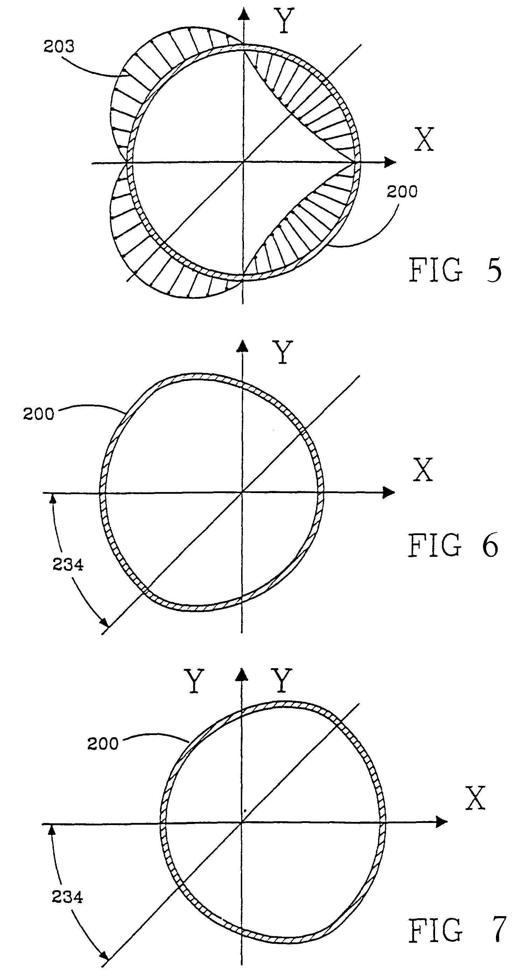

As an alternate to the embodiment of FIGURES 1 or 16, a similar configuration can be used whereby the fluid flows transversely around the outside of a vibrating surface or tube such as in FIGURES 2 through 4. In these FIGURES tube 200 is vibrated in at least one radial mode of vibration causing deformation into an elliptical cross sectional shape, although any radial mode could be used. In FIGURES 2 through 4, the alignment of the vibratory pattern is shown to be along the X and Y axes and therefore aligned with the direction of the transverse fluid flow 201, however, other alignments of the vibratory pattern with flowing fluid 201 can also be used. FIGURE 2 shows tube 200 when it has reached its peak deflection in the Y direction. FIGURE 3 shows tube 200 passing through its circular shape after being deflected as in FIGURE 2, and FIGURE 4 shows tube 200 when it has reached its peak deflecting in the X direction. Fluid flow 201 flowing transverse to the axis of tube 200 changes its flow direction slightly as it conforms to the vibratory motion of tube 200. One result of this change in direction is a rotation 202 of fluid flow 201, which is most pronounced when tube 200 is passing through its circular shape (FIGURE 3) thus having the maximum tube wall velocity and causing the maximum fluid rotational velocity. The combination of fluid flow 201 and angular rotation 202 of the fluid flow 201, results in a Coriolis force distribution around the outside of tube 200. FIGURE 5 shows a resultant Coriolis force distribution 203 that could result from this combination of fluid flow and angular rotation. During the first half of a vibration cycle of tube 200, Coriolis force distribution 203, bearing against tube 200 would in turn cause a small deflection of tube 200 similar to that shown in FIGURE 6, where the axis of the deflected shape is displaced by some angle 234 from the axis of the forced vibration. During the second half of a vibration cycle of tube 200, the angular velocities 202 would reverse causing the sign of the Coriolis force distribution 203 to also reverse, in turn causing the deformation of tube 200 to be similar to that shown in FIGURE 7. The magnitude of the resultant deflections shown in FIGURES 6 and 7 will therefore be proportional to the magnitude of the mass flow rate of fluid flow 201.

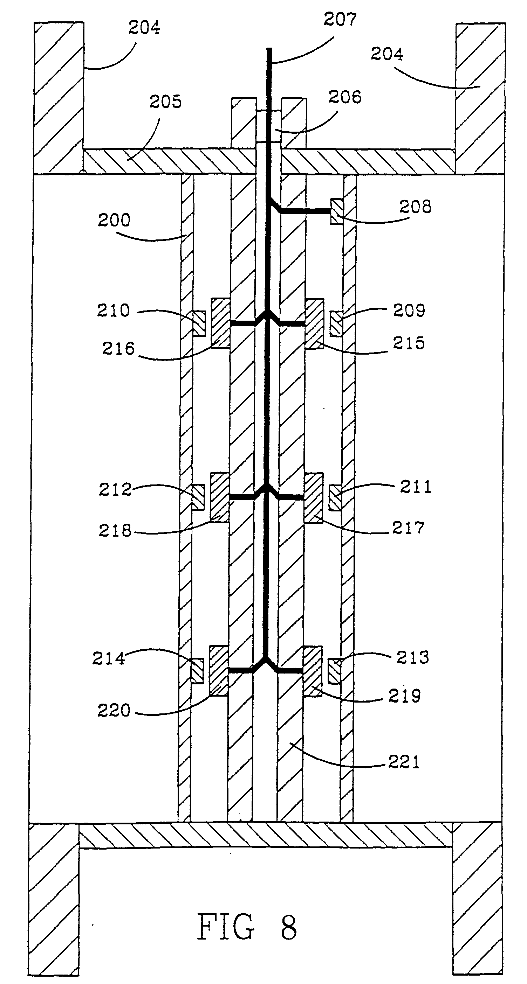

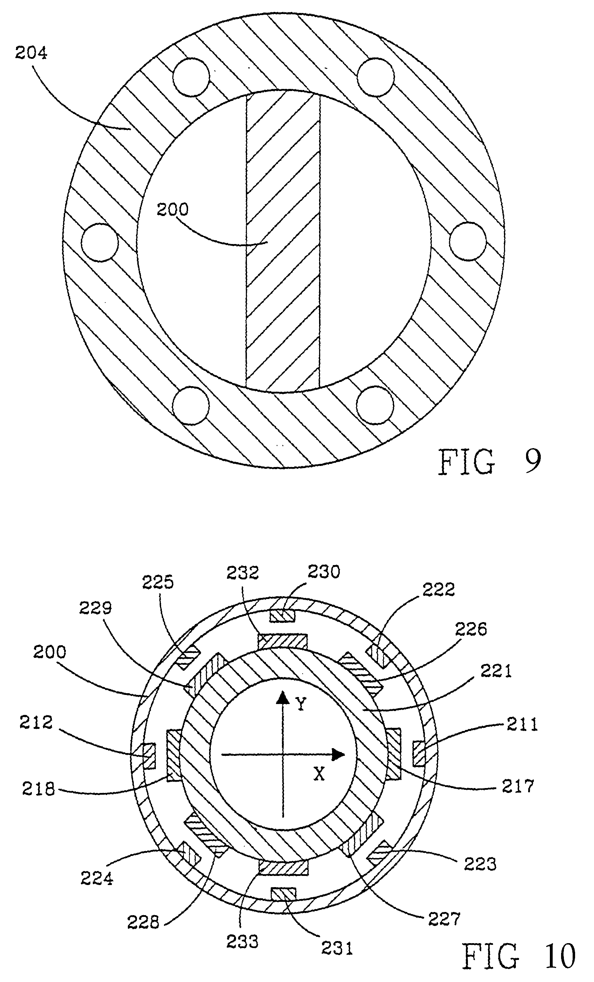

In order to utilize this transverse flow arrangement, an embodiment similar to that shown in FIGURE 1 could be used as an insertion device. FIGURE 8 shows another transverse flow embodiment in which flow tube 200 is mounted across the diameter of pipe 205, which in turn is mounted between pipe flanges 204, thereby forming a short "Spool Piece", which can easily be mounted in any pipe line. FIGURE 9 shows an axial view (down the axis of pipe 205) of the embodiment of FIGURE 8 showing flange 204 and the transverse mounted flow tube 200. FIGURE 10 is a cross sectional view of flow tube 200 of the embodiments of FIGURES 8 and 9, showing the arrangement of motion drivers and sensors inside flow tube 200. A detailed explanation of the embodiment of FIGURE 8 is hereinafter described.

FIGURE 8 shows pipe 205 mounted in association with pipe flanges 204 thereby forming a simple spool piece which can easily be mounted in a pipe line. Pipe 205 and flanges 204 are made of steel, stainless steel, alloy steel or any material suitable for the conveyance of fluids. Feed through 206 mounted on pipe 205 allows the conveyance of signal carrier 207 through the wall of pipe 205 into the measuring portion of the device while maintaining a pressure tight seal between the inside of the measuring device and the outer environment. Flow tube 200 is transverse mounted across the diameter of pipe 205, and is preferably made of stainless steel although it could be made of any of the materials previously described for other embodiments. Mounted on the inside of flow tube 200 are motion driving magnets 209 through 214. These motion driving magnets are preferably made of samarium cobalt and are mounted to flow tube 200 by means of adhesive bonding, brazing, or mechanical attachment. Mounted co-axially within flow tube 200 is mounting bracket 221 which is used for the mounting of motion driving and sensing coils. FIGURE 8 shows motion driving coils 215 through 220 mounted on bracket 221 and arranged in association with driving magnets 209 through 214, respectively. Driving coils 215 through 220 are electrically connected to an electronic circuit, via signal carrier 207. Temperature sensor 208 is also mounted in association with flow tube 200 and is electrically connected to an electronic circuit, via signal carrier 207, and is used to monitor the temperature of flow tube 200. The operation of the embodiment of FIGURE 8 will hereinafter be described.

Excitation signals from electronics are conveyed to motion driving coils 215 through 220. These signals therefore cause alternating forces upon motion driving magnets 209 through 214. These forces in turn cause flow tube 200 to vibrate in at least one and preferably two radial modes of vibration. The preferred primary radial mode of vibration is the two lobed elliptical mode similar to that shown in FIGURES 2 through 4, with no reversals in cross sectional shape (no nodes) along the length of tube 200. The preferred secondary radial mode of vibration is a four lobed mode, again with no reversals (no nodes) along the length of tube 200.

The arrangement and the number of driving magnets and coils, and the phasing of the excitation signals to these coils can be designed to enhance the desired radial modes of vibration while suppressing the excitation of unwanted vibrations. For example, as a minimum, only one motion driving magnet and coil pair (such as 211 and 217, respectively) is necessary to cause the requisite radial vibration. However by using another diametrically opposed motion driving magnet coil pair (212 and 218, respectively), a better balanced situation is achieved and only alternating opposing forces are applied to tube 200 thereby eliminating the excitation of any bending modes of vibration. In addition, more motion driving magnet coil pairs (209 with 215, 210 with 216, 213 with 219, and 214 with 220) are used in FIGURE 8 to distribute the driving force along the length of tube 200. Further, additional motion driving magnet coil pairs (230 with 232, and 231 with 233, of FIGURE 10), radially displaced around the circumference of tube 200 can also be used.

The number and placement of motion driving magnets and coils around the circumference and along the length of tube 200 is determined by the desired radial modes to be excited, and the desired distribution of driving force along tube 200. For example, if a radial mode were chosen for the primary driven mode in which the elliptical cross sectional shape reverses once (one node) along the length of the tube, then the excitation of magnet coil pairs 209 with 215, and 210 with 216, would be excited in a 180° phase relationship with magnet coil pairs 213 with 219, and 214 with 220, while pairs 211 with 217 and 212 with 218 would not be needed, thereby causing one end of tube 200 to be deformed in the Y direction (as in FIGURE 2) while the other end of tube 200 is deformed in the X direction (as in FIGURE 4).

Using the preferred two lobed elliptical mode (with no reversals), as the primary mode and the 4 lobed mode (with no reversals) as the secondary mode, the combination of radial vibration and fluid flow causes an oscillating Coriolis force distribution similar to that shown in FIGURE 5. The oscillating Coriolis force distribution in turn causes tube 200 to radially deform into shapes similar to those shown in FIGURES 6 and 7, as tube 200 passes through its normally (no flow) circular cross sectional shape as in FIGURE 3. FIGURE 10 shows an array of motion sensing magnets 222 through 225 and their respective motion sensing coils 226 through 229. These motion sensing magnets and coils are radially arranged and displaced from the motion driving magnets and coils, by an angle similar to angle 234 of FIGURES 6 and 7, so as to detect the maximum amount of resultant flow induced deflection of tube 200.

With no flow passing over the outside of tube 200, no Coriolis force distribution will result and tube 200 will simply vibrate in its primary mode as shown in FIGURES 2 through 4, and also vibrate in its secondary mode. As fluid flow 201 increases around the outside of tube 200, and the resultant Coriolis force distribution 203 causes tube 200 to deflect as shown in FIGURES 6 and 7, motion sensing coils 226 through 229 will detect an increasing change in the amplitude of vibration at their locations proportional to flow rate. If angle 234 is chosen to correspond to a translational radial node of tube 200 for the driven vibration (approximately 45°), then the motion signal generated in motion sensing coils 226 through 229 will be primarily proportional to flow rate 201, and will be primarily in phase with the velocity of the Coriolis deflection, which is 90° phase displaced from the velocity of the forced vibration. In this arrangement the phase of the signals produced at the motion sensing coils 226 through 229 will be substantially invariant with flow rate except that they will invert (180° phase change) for flow going in the opposite.direction, thereby allowing for both the detection of flow direction, as well as flow rate.

As an alternate to locating the motion sensing magnets and coils at an angle 234 which corresponds to a radial translational node, so that only Coriolis induced deflection signals are excited in the motion sensing coils, an angle 234 could be chosen which does not correspond to a radial translational node. If this is done, the signals excited in motion sensing coils 226 through 229 will then be a combination of the driven motion and the Coriolis induced motion. Since these two motions are phase displaced from each other by substantially 90°, the resultant combination of motions and thus the resultant signals in motion sensing coils 226 through 229 will have a change in both amplitude and phase components which are proportional to flow rate. To determine the flow rate from these combined signals, either a change in amplitude or a change in phase measuring technique could be used. For example, signals in motion sensing coils 229 and 227 would be phase or time displaced from the signals in motion sensing coils 226 and 228. Therefore by electrically connecting coils 226 with 228 and coils 227 with 229, two signals can be attained which will be phase or time displaced from each other by an amount which is proportional to mass flow rate. Alternately these combined signals can be evaluated for their change in amplitude as referenced to the driven amplitude. The change in amplitude as referenced to the driven amplitude will therefore be functionally related to the flow rate of the process fluid.

As will be described, the pressure and density of the process fluid can then also be determined by evaluating the relationship between the primary frequency and the secondary frequency. In addition the temperature of the fluid will be detected by temperature sensor 208. The signal from temperature sensor 208 will be conveyed back to the electronics via signal carrier 207, whereby the temperature signal can then be used for any requisite compensation or for an output for customer use. And as will be described, the viscosity of the process fluid can then also be determined by evaluating the power necessary to cause the driven vibration.

A fundamental difference between the use of radial modes and bending modes of vibration for causing Coriolis induced deflections of flow tubes with internal fluid flow, is that bending modes tend to impart a rotational velocity of the entire fluid stream which (except for compressibility effects) is fairly constant at any point of a cross section of the flow tube, while the rotational velocity caused by radial modes can vary throughout the cross section of the flow tube.

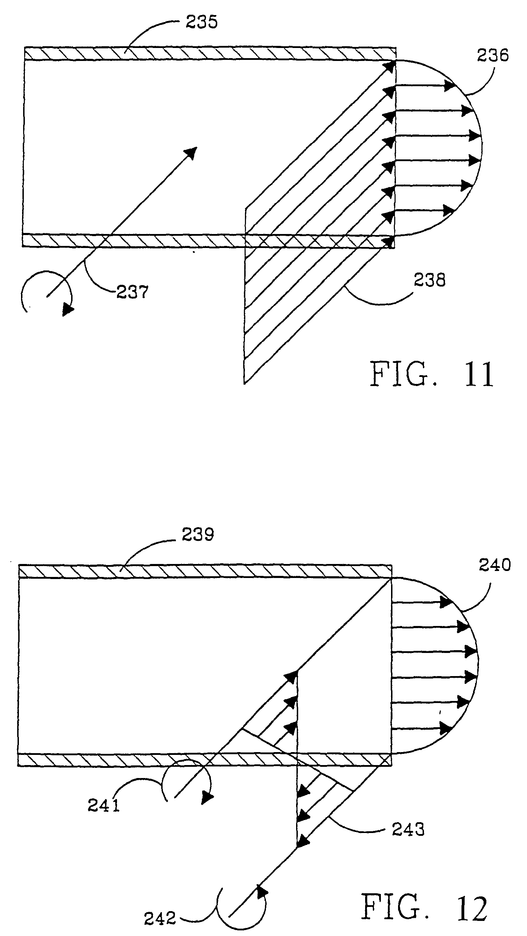

FIGURE 11 shows a section of a bending mode flow tube 235 in which fluid is flowing with a velocity profile 236 as shown. Since the entire flow tube is rotating 237 due to a bending mode, the rotational velocity distribution 238 at any point through the cross section of tube 235 will be nearly constant.

By contrast, FIGURE 12 shows a section of a radial mode flow tube 239 in which fluid is flowing with a velocity profile 240 as shown. Since tube 239 is being vibrated in a radial mode, the top surface of tube 239 will rotate 241 in the opposite sense as that of the bottom surface rotation 242, thereby causing a varying rotational velocity distribution 243, which varies through the cross section of tube 239.

Since the Coriolis force contribution of each small unit of fluid is a function of its mass times its velocity 240 times its rotational velocity 243, and since these parameters can vary as a function of position within the flow tube, radial mode flow meters can have a dependency on the velocity profile 240 of the flowing fluid. In many cases, especially in gasses and in low viscosity fluids, the velocity profile will be nearly constant and can therefore be neglected or compensated for by using a simple mathematical relationship with the fluids temperature, flow rate, viscosity, etc. In higher viscosity fluids, or where upstream disturbances have caused an irregular velocity profile, other methods for determining and/or modifying the velocity profile of the fluid and thereby allowing for the compensation of any errors caused by velocity profile are hereinafter described.

As will be described for other embodiments, the flow rate, pressure, and density of a flowing fluid can be determined by the use of two simultaneous radial modes of vibration on a flow tube. It has also been stated that either of the two modes of vibration can be used to measure flow rate since either mode of vibration in combination with mass flow rate, will cause Coriolis induced deflections of the tube wall, which can be measured. A unique consequence of using two radial modes of vibration is that the resultant rotational velocity distribution (243 of FIGURE 12) will be different for different radial modes of vibration, therefore giving rise to a unique method whereby the effects of velocity profile changes can be determined and compensated for.

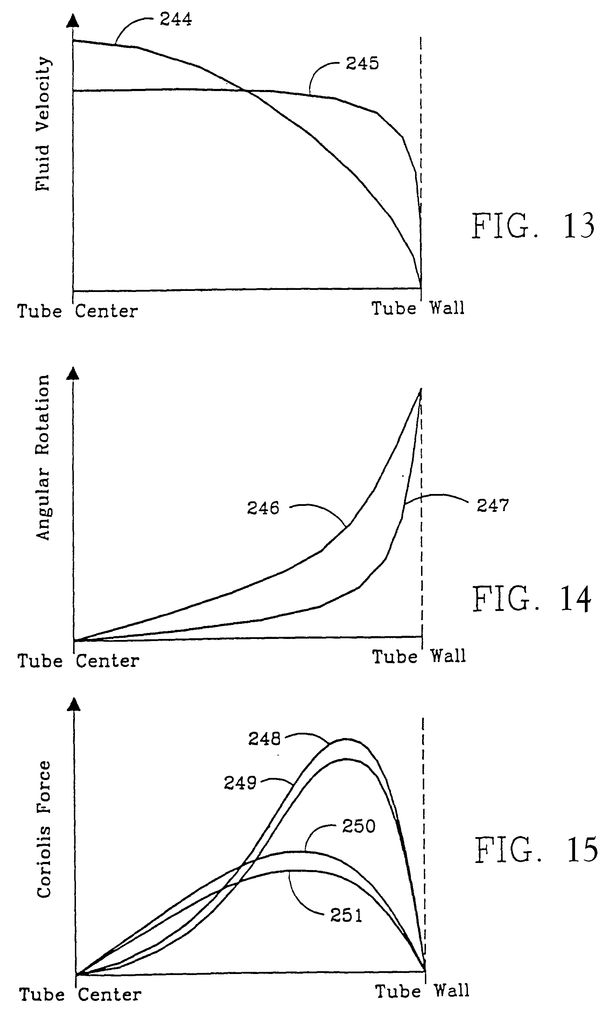

FIGURE 13 is a plot of two typical flow velocity profiles 244 and 245 which represent parabolic and "plug" flow, respectively. The area under velocity profiles 244 and 245 are scaled to be the same therefore representing the same mass flow rates. FIGURE 14 is a plot of the rotational velocity distributions 246 and 247, which could be caused by the primary radial mode and the secondary radial mode, respectively. In this example, rotational velocity distribution 246 is a second order curve while 247 is a third order curve, and the precise curves for any given design will depend on, among other things, the geometry and on the chosen modes of primary and secondary vibration.

The Coriolis force contribution of any part of the fluid is therefore the product of the mass times the flow velocity times the rotational velocity. FIGURE 15 shows four plots of resultant Coriolis force distributions. Coriolis force distributions 248 and 249 would result from velocity profile 245 times rotational velocity distributions 246 and 247, respectively, while Coriolis force distributions 250 and 251 would result from velocity profile 244 times rotational velocity distributions 246 and 247, respectively. Since the mass flow rates represented by velocity profiles 244 and 245 are the same, the final resultant flow measurement signals need to be the same.

The total Coriolis force for velocity profile 244 would be represented by the area under curves 250 (for the primary mode) and 251 (for the secondary mode), and the total Coriolis force for velocity profile 245 would be represented by the area under curves 248 (for the primary mode) and 249 (for the secondary mode). Visual inspection of FIGURE 15 shows that the area under each curve is different and will therefor produce different amounts of tube wall deflection with different flow velocity profiles even though they represent the same mass flow rates.

By measuring the flow rate independently with each of the two driven modes of vibration, a compensation signal can be created, functionally related to the two independent flow results, and can be used to eliminate errors in either flow signal caused by changing velocity distribution. For this example the ratio of the resultant flow signals produced by the primary and the secondary modes, raised to the third power, is a number which can then be multiplied by either one of the two flow signals to produce a result which is nearly constant for constant mass flow rates during large variations in velocity profile.

The precise mathematical compensation necessary will depend on, among other things, the design of the meter and the chosen modes of primary and secondary vibration. Therefore, many different mathematical relations can be created from the two flow signals and used to compensate the final result for errors caused by changing velocity profiles.

For still higher accuracy, three or more modes of vibration could be used, and more complex compensation factors can be created from the basic phase or amplitude measurement from each mode of vibration.

Other methods of compensating for the effects of velocity profile include calibrating the device with known flow rates, and determining the characteristic output curve for the device. This characteristic output curve can then be loaded into the memory of a microprocessor (look up table), and then used to compensate or linearize the resultant output signal for any effects caused by velocity profile. Mathematical relations based on Reynolds number, viscosity, temperature, density, etc. can also be used in compensation factors to corrects for any undesired non linear effects.

As a further improvement on the embodiment of FIGURE 1, a similar embodiment can be located within a pipe or spool-piece to confine the fluid flow 179 in the annular space between vibrating surface 185 and pipe 252 as shown in FIGURE 16. In this arrangement, a spool-piece would be formed by the combination of pipe 252 and flanges 253. One additional benefit of the embodiment of FIGURE 16 is that effects due to variations in the velocity profile are greatly reduced. As was just described, the net Coriolis force resulting from flow rate can be influenced by changes in the velocity profile. This sensitivity to velocity profile is exacerbated by the geometry of the angular velocity profile (243 of FIGURE 12) since it passes through zero in the middle of the tube. By shifting the geometry of the angular velocity profile (243 of FIGURE 12) so that the zero point is moved toward one side or eliminated, any velocity profile effect will be greatly reduced or eliminated. Several methods of modifying the angular velocity gradient and thereby reducing or eliminating velocity profile effect will now be described.

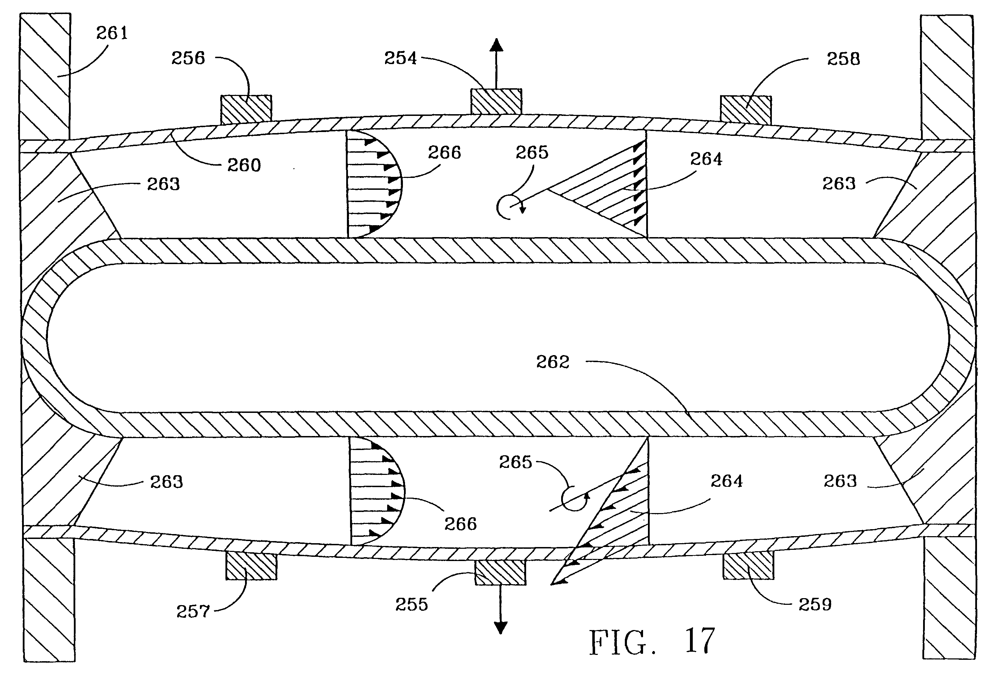

FIGURE 17 is a drawing of an embodiment utilizing a flow conduit similar to that of several previously described embodiments, with the addition of a flow conditioner 262 in the flow stream to change the shape of the angular velocity profile 264 from having a zero point in the center of the fluid stream. In this embodiment, flow conditioner 262 is a stainless steel tube in the shape of a cylinder with rounded ends, suspended in the center of the vibrating flow tube 260 by supports 263 which are thin blades designed to rigidly hold flow conditioner 262 without disturbing the fluid flow 266. Flow tube 260 is instrumented with motion driver/sensors 254 through 259, and is vibrated in at least one and preferably two radial mode of vibration as will be described for other embodiments to both measure the flow rate and to determine the pressure and density of the flowing fluid. FIGURE 17 shows the vibration of the tube 260 as the top and bottom surfaces of tube 260 are moving away from each other. At this time the flowing fluid 266 conforms to the deforming shape of tube 260 and thereby is caused to angularity rotate 265 about an axis perpendicular to the flow direction. The magnitude of angular rotation 265 will be a maximum at the moving surface of tube 260 and zero at the surface of flow conditioner 262 thereby describing an angular velocity gradient 264. Since this angular velocity gradient 264 does not pass through a zero value in the center of the tube (as did the gradient 243 of FIGURE 12), fluid velocity profile 266 can experience large changes in shape (especially symmetrical changes) without significantly altering the resultant Coriolis forces thereby greatly improving the performance of the device under conditions where fluid velocity profiles are changing.

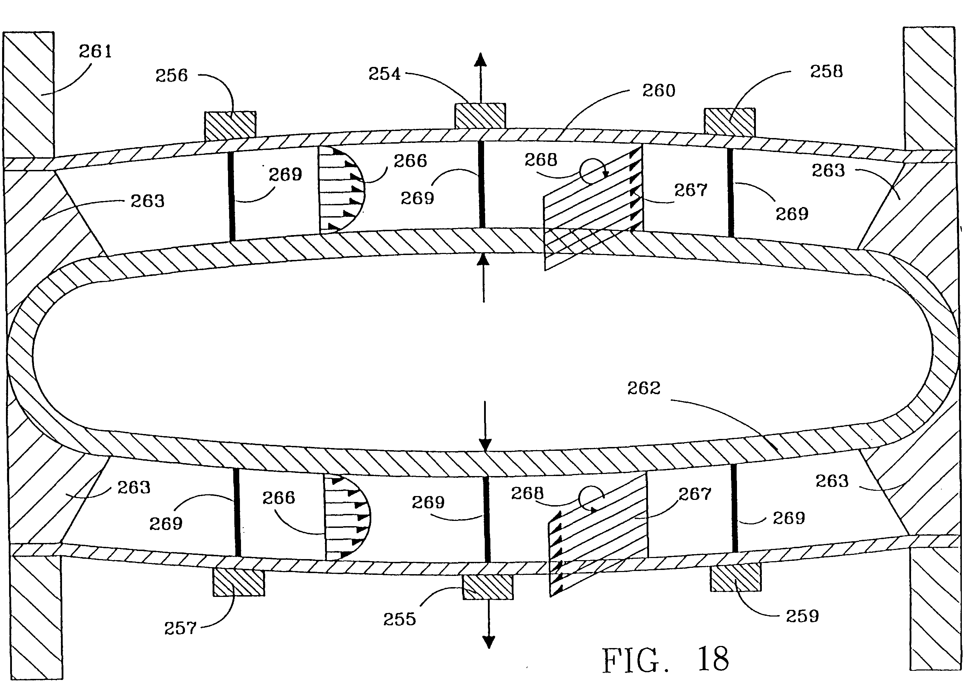

FIGURE 18 incorporates all the elements of FIGURE 17 and additionally provides for vibrational couplings 269 between flow tube 260 and flow conditioner 262. In addition, flow conditioner 262 is designed to be flexible so that the vibration of the flow tube 260 is transmitted to flow conditioner 262 so that its motion is similar to that of flow tube 260. The advantage of this arrangement is that with flow conditioner 262 vibrating in a similar fashion to that of flow tube 260, the angular velocity profile 267 of the flowing fluid 266 will be substantially constant thereby eliminating any velocity profile effect completely. In this embodiment, vibrational coupling 269 can be mechanical connections arranged to transmit the vibration of the flow tube 260 into flow conditioner 262. Other means for coupling the vibration include metal strips, wires, magnetic fields, and the coupling afforded by the flowing fluid 266. With fluids that are highly incompressible such as liquids, the fluid itself would provide adequate vibrational coupling.

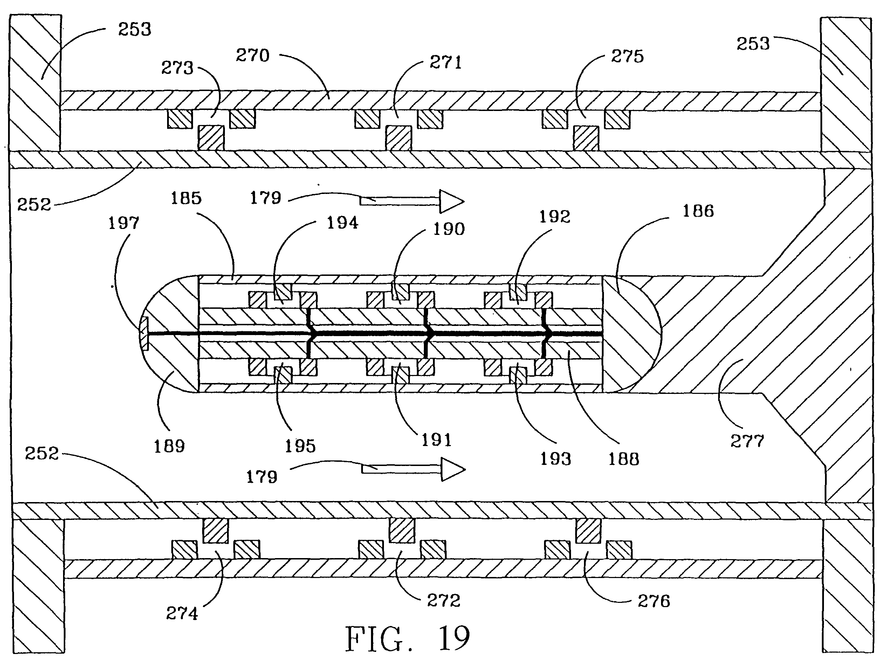

FIGURE 19 is similar to that of FIGURE 16 with the addition of an outer case 270, and magnet/coil pairs 271 through 276. In this embodiment, surface 185 is excited in at least one radial mode as previously described to measure the flow rate. In addition, tube 252 can also be excited in another mode of vibration to simultaneously measure the flow rate using a mode of vibration at a different frequency than that of surface 185. In this arrangement the frequency of tube 252 would increase with pressure while that of surface 185 would decrease with increasing pressure, and both frequencies would decrease with increasing density, thereby allowing for far more precise pressure and density determinations than with other embodiments. In addition, the dual measurement methods previously described to determine and compensate for velocity profile can easily be implemented using the vibration on surface 185 and that on tube 252. In addition, surface 185 acts as a flow conditioner and thereby reduces velocity profile effect as previously described. Since the diameter of surface 185 can be small in relation to tube 252, the embodiment of FIGURE 19 will be much less expensive, and will use less power than one where the outer tube 252 is vibrated. This attribute becomes more important as meter sizes increase since cost and fabrication difficulty increases greatly with pipe size. In addition, as will be described for other embodiments, the power required to maintain the vibration of surface 185 or tube 252 is a function of the viscosity of flowing fluid 179. Therefore by measuring this power, a signal can be created proportional to fluid viscosity which can be used by the customer.

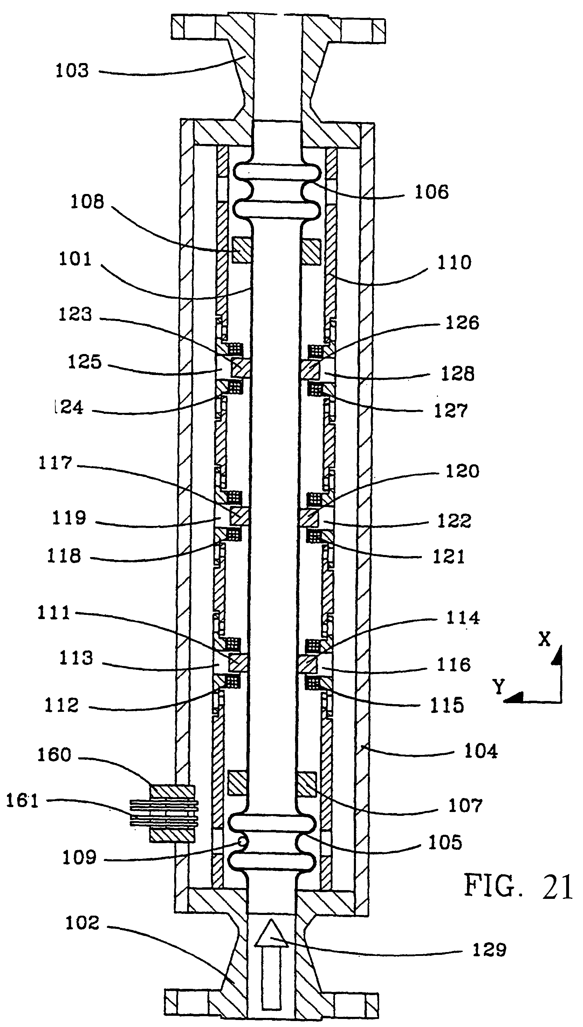

The use of dual vibration modes will now be described with reference to FIGUR 21 for measuring pressure and density. Both radial and bending modes of vibration have been described for these purposes. In addition to the use these types of vibration modes, torsional modes of vibration can be used for the secondary mode of vibration for the determination of pressure and density using methods that will be described hereafter. The advantage of using a torsional mode of vibration as the reference mode to be used in conjunction with the primary radial mode for the determination of pressure and density is that the change in frequency of torsional modes of vibration due to changes in pressure and density is significantly different than that for either radial or bending modes thereby allowing for improved density and pressure determinations.

The Coriolis mass flow meter of FIGURE 21 consists of flow conduit 101 which is preferably made of a strong flexible noncorrosive material such as stainless steel, however other materials such as glass, titanium or others could also be used.

The ends of flow conduit 101 are formed into flexible joints 105 and 106 to reduce or eliminate axial stress affects.

From the above, it is apparent that the present invention provides an apparatus for measuring attributes of a fluid comprising: (1) a body capable of being inserted into and surrounded by the fluid, (2) means, disposed within the body, for vibrating a surface of the body in a radial mode of vibration, the vibrating surface developing Coriolis forces within the fluid, (3) means, coupled to the surface, for measuring motion of the surface, the motion being a function of Coriolis forces developed in the fluid and (4) means, coupled to the measuring means, for determining an attribute of the fluid as a function of the motion of the surface.

Although the present invention and its advantages have been described in detail, it should be understood that various changes, substitutions and alterations can be made herein without departing from the spirit and scope of the invention as defined by the appended claims.

Toward the ends of the straight center section of flow conduit 101 are stiffener rings 107 and 108 which are fixedly attached to flow conduit 101, preferably by brazing, to isolate the prescribed radial vibration to the area of flow conduit 101 between stiffener rings 107 and 108. Stiffener rings 107 and 108 are preferably made of a metallic material such as stainless or carbon steel.

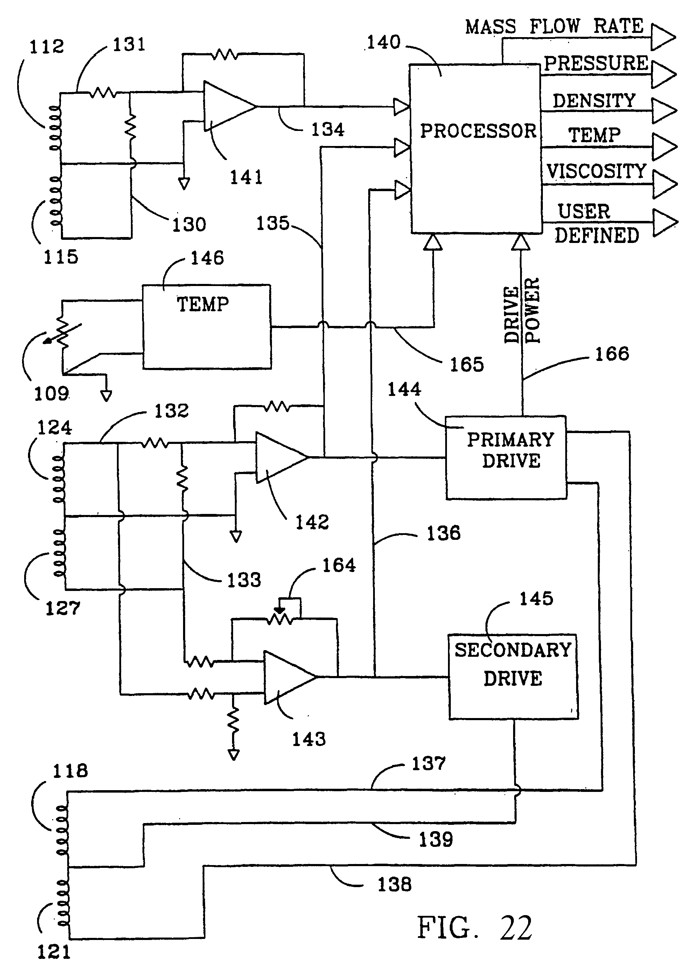

Mounted in association with flow conduit 101 is temperature sensor 109 which is preferably a platinum resistance thermal device (RTD). Temperature sensor 109 is mounted so as to accurately measure the temperature of flow conduit 101 while not interfering with any prescribed mode of vibration. Accordingly, temperature sensor 109 is mounted on flow conduit 101 in the area of flexible joint 105 which is isolated from the radial vibration by stiffener ring 107. Circuit component 146 of FIGURE 22 uses signals from temperature sensor 109 to produce signal 165 which represents the temperature of flow conduit 101, and is conveyed to circuit component 140 for further processing.

The ends of flow conduit 101 are fixedly attached to manifolds 102 and 103 by a welding or brazing process to form a gas tight rigid connection.

Fixedly attached to flow conduit 101 and located approximately half way between stiffener rings 107 and 108 are drive magnets 117 and 120.

Drive magnets 117 and 120 are located diametrically opposite each other to facilitate driving two prescribed modes of vibration, of which, the primary mode is a two lobed elliptically radial vibration mode, with no reversals of the orientation of its cross sectional shape along the length of flow conduit 101. The secondary mode is a simple bending mode, as shall further be explained.

Located part way between drive magnets 117 and 120, and stiffener ring 107, are pickoff magnets 111 and 114 which are fixedly attached to flow conduit 101, and are arranged in a diametrically opposite pattern.

Located part way between drive magnets 117 and 120, and stiffener ring 108, are pickoff magnets 123 and 126 which are fixedly attached to flow conduit 101, and are arranged in a diametrically opposite pattern.

As an alternate to the diametrically opposite arrangement of pickoff magnets as was just described, one or more pickoff magnets could be arranged at different intervals along the length and around the circumference of flow conduit 101.

Arranged in association with flow conduit 101 is support bracket 110 which is preferably made of nonmagnetic material such as stainless steel. Support bracket 110 is not required for the operation of the invention however it facilitates design and manufacturing processes and is therefore included for practical reasons.

Fixedly attached to support bracket 110 are drive coils 118 and 121 which are arranged in association with drive magnets 117 and 120, respectively, to collectively form motion drivers 119 and 122, respectively.

Fixedly attached to support bracket 110 and arranged in association with pickoff magnets 111 and 114 are pickoff coils 112 and 115, respectively, which collectively form motion detectors 113 and 116, respectively.

Fixedly attached to support bracket 110 and arranged in association with pickoff magnets 123 and 126 are pickoff coils 124 and 127, respectively, which collectively form motion detectors 125 and 128, respectively.

Support bracket 110 can be designed to carry all or a part of any axial stress or force that may exist due to thermal expansion, pipeline or mechanical conditions. In addition, support bracket 110 can be used to facilitate wiring and interconnection of any electrical components, and to facilitate testing of the assembly prior to the addition of any case. Many different embodiments for support bracket 110 are therefore anticipated including metallic pipe, tubing, square tubing, molded plastic, welded brackets and others.

Drive coils 118 and 121 are electrically excited in series fashion, as shown in FIGURE 22, by signals 137 and 138, at a prescribed frequency and phase, from circuit component 144, to produce oppositely directed forces on drive magnets 117 and 120, respectively, thus causing the primary two lobe elliptical mode of vibration similar to that shown in FIGUREs 2-4. Concurrently, drive coils 118 and 121 are electrically excited in parallel fashion from their center connection, at a prescribed frequency and phase, by signal 139 from circuit component 145, to produce similarly directed forces on drive magnets 117 and 120, respectively, thus causing a bending mode of vibration .

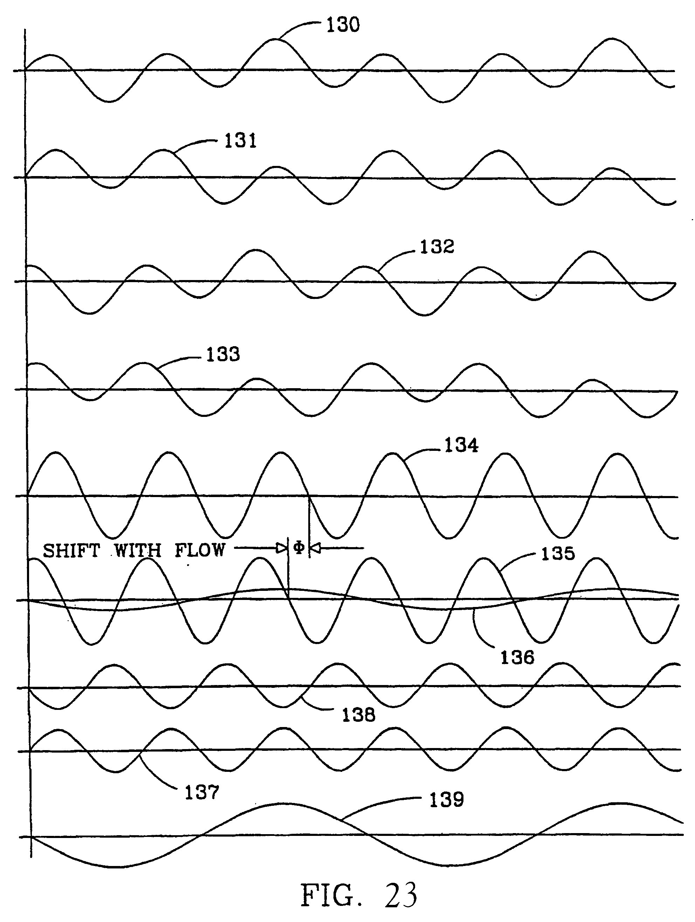

Once the requisite modes of vibration are established on flow conduit 101, pickoff coils 112, 115, 124 and 127 will produce signals 131, 130, 132 and 133, respectively, each of which represents the vibratory motion of flow conduit 101 at their coil's particular location, and will thus be a combination of both the primary and secondary frequencies as shown in FIGURE 23.

Circuit component 141 combines signals 130 and 131 to produce signal 134 which represents the sum of signals 130 and 131. By arranging coils 112 and 115 so that the oppositely directed motion will produce in-phase signals on coils 112 and 115, and the similarly directed motion will produce out-of-phase signals on coils 112 and 115, the sum signal 134 will essentially represent only the primary radial mode component of the motion at the location of coils 112 and 115.

A similar method is employed to combine signals 132 and 133, from pickoff coils 124 and 127, respectively, using circuit component 142, to make signal 135 which represents the sum of signals 132 and 133. Similar to signal 134, signal 135 represent the oppositely directed motion and thus the primary radial motion of flow conduit 101 at the location of pickoff coils 124 and 127.

Additionally, signals 132 and 133 are combined by circuit component 143 to produce signal 136 which represents the difference between signals 132 and 133.

Since, as previously explained, the sum signal 135 of the pickoff signals 132 and 133 represents the oppositely directed motion and thus the primary radial mode of vibration, the difference signal 136 represents the similarly directed motion and thus the secondary bending mode of vibration.

Circuit component 140, uses signals 134, 135, 136, 165 and 166, and determines the mass flow rate, pressure, density, temperature, viscosity, and other user defined parameters of fluid 129, as shall now be explained.

One measurable effect of the Coriolis force induced deflection of flow conduit 101 is a shift D in the time or phase relationship of both signals 134 and 135, functionally related to mass flow rate, as shown in FIGURE 23. Signal 135 is seen to advanced in time while signal 134 is delayed in time due to mass flow rate. However, it is understood that alternate designs can reverse these phase relationships from those just described.

Each of signals 134 and 135 shift their time relationship with respect to a non-shifting reference such as drive signal 137 or 138, as a function of mass flow rate. Accordingly, each could individually be used to measure mass flow rate by comparing either signals 134 or 135 to a non-shifting reference. However, using the difference D between signals 134 and 135 doubles the available measurement and is thus preferable.

The amount of deflection of flow conduit 101 from a given Coriolis force distribution is related to the stiffness of flow conduit 101 and thus controls the sensitivity of the device to mass flow rate.

The stiffness and therefore the sensitivity of the device can change due to variations in the temperature, the pressure, and for certain designs the density of the process fluid. These parameters alter sensitivity by affecting, among other things, the elastic modulus, the stress, and the dynamic response of flow conduit 101, respectively. These and other process fluid parameters are therefore measured both to compensate the mass flow rate signal for sensitivity changes, and to supply the user with valuable additional information about the process fluid, as shall now be explained.

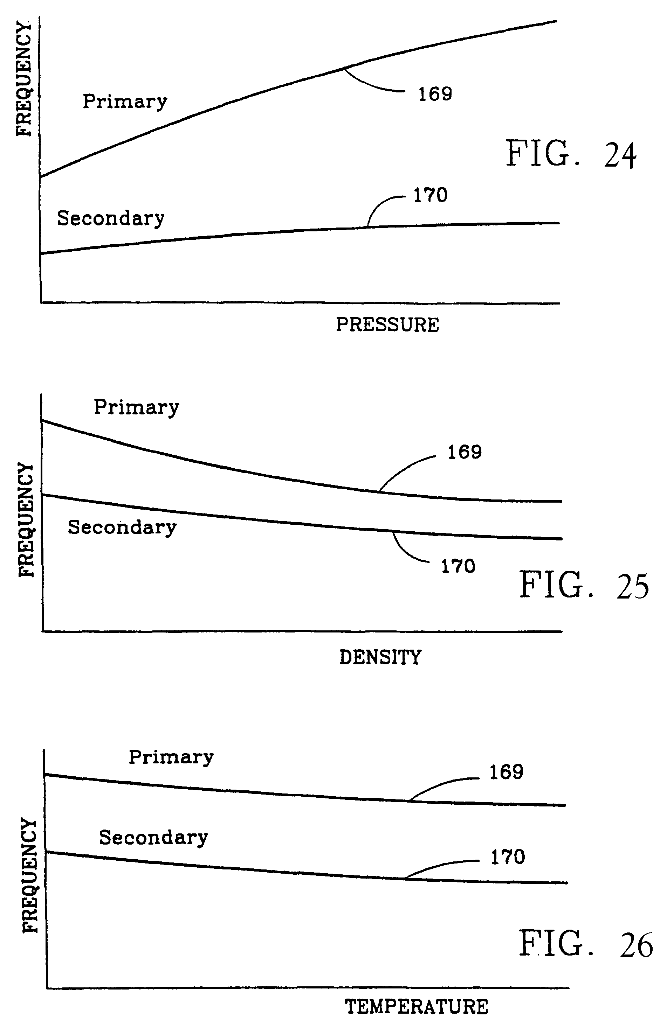

FIGURES 24-26 show graphs of possible representative variations of the primary frequency 169, and the secondary frequency 170, of flow conduit 101, as functions of pressure, density and temperature, respectively.

FIGURE 24 shows that an increase in pressure can possibly cause an increase in the frequency of both the primary and secondary modes of vibration, by different amounts.

FIGURE 25 shows that an increase in density can possibly cause a decrease in the frequency of both the primary and secondary modes of vibration, again by different amounts.

FIGURE 26 shows that an increase in temperature can possibly cause a decrease in the frequency of both the primary and secondary modes of vibration, typically by similar amounts. This is typical for materials that exhibit a decrease in elastic modulus with an increase in temperature such as stainless steel or titanium.

As previously described, the mass flow rate passing through flow conduit 101 will be functionally related to (a) the time relationship between signals 134 and 135, (b) the stress in flow conduit 101 which will be functionally related to the pressure difference between the inside and the outside of flow conduit 101, (c) the elastic modulus of flow conduit 101, which will be functionally related to its temperature, and (d) the density of the process fluid. This functional relationship can therefore be defined as follows;$\text{M' = f (D) * f (P) * f (D) * f (T) * f (L)}$

Where M' represents mass flow rate, f (D) is the functional relation between mass flow rate and the time difference between signals 134 and 135, f (P) is a factor representing any change in the sensitivity of the device due to pressure, f(D) is a factor representing any change in the sensitivity of the device due to density, f(T) is a factor representing any change in the sensitivity of the device due to temperature, and f(L) is a factor representing a linearity correction.

Circuit component 140 of FIGURE 22 uses signals 134, 135, 136 and 165 to determine the value of the factors in equation (1) and solve it for mass flow rate and other parameters as follows.

Circuit component 140 of FIGURE 22 determines the time difference (D) between signals 134 and 135 by measuring the interval between each signals passing of a reference voltage, such as zero crossing, using a known reference such as a voltage ramp from an integrator circuit, counting the number of pulses from a clock source, or other methods such as Fast Fourier Transforms and the like. The value of the time difference (D) then represents the uncompensated mass flow rate signal.

Circuit component 140 then determines the pressure, density and temperature of the process fluid to both compensate the mass flow rate signal and to supply the user with this valuable additional information, as follows.

As shown on FIGUREs 24-26, the frequency for both the primary and the secondary vibrations typically vary as functions of pressure, density and temperature. One exception to this is when a material is used for flow conduit 101 which has a zero temperature coefficient of elastic modulus, such as Low Expansion 43-PH by Carpenter Technology Corporation, thus causing the frequencies to be independent of temperature. These graphs can be calculated or determined by calibration for a particular design.

A functional relation can therefore be developed mathematically defining each of the graphs in FIGURES 24-26. These functional relations, along with primary frequency information from either of signals 134 or 135, secondary frequency information from signal 136, and temperature information from signal 165, are then used by circuit component 140 to determine the pressure and density of the process fluid. The frequencies of signals 134 or 135 and signal 136 are determined by measuring the cycle period using similar techniques to those previously described for measuring the time difference (D) between signals 134 and 135.

As a simplified example, the primary and secondary frequencies could have the following linear relationships, understanding however, that these relationships will normally not be simple linear relationships.${\text{F}}_{\text{1}} \text{= 2000 + 2 (P) - 100 (D) - .2 (T)}$${\text{F}}_{\text{2}} \text{= 800 + 1 (P) - 70 (D) - .1 (T)}$

Where:
F₁ = Primary frequency in Hertz
F₂ = Secondary frequency in Hertz
   P = Pressure in pounds per square inch
   D = Density in grams per cubic centimeter
   T = Temperature in degrees Centigrade

Since temperature (T) is determined independently by temperature sensor 109 and circuit component 146, and frequencies F₁ and F₂ are determined by circuit component 140, equations (2) and (3) therefore represent a system of two equations with two unknowns which is then solved by circuit component 140 thus determining both density and pressure. For the above example, if the temperature is for example 100°C, and the primary frequency is 2050 Hertz and the secondary frequency is 820 Hertz, then solving equations (2) and (3) yields a pressure of 47.5 pounds per square inch and a density of .25 grams per cubic centimeter.

Once pressure, temperature and density are thus determined, the uncompensated mass flow rate signal, as previously determined from time delay (D), can then be compensated by appropriate pressure, temperature and density factors as shown in equation (1).

In addition, equation (1) includes a linearity factor f(L) which can be used to correct non-linearities. For example, the relationship between time delay (D) and mass flow rate can be a function of the tangent of the phase angle shift of signals 134 and 135. This slight nonlinearity can thus be corrected by circuit component 140 by making the factor f(L) in equation (1) a tangent function.

Circuit component 140 then supplies signals representing mass flow rate, pressure, density and temperature as outputs for the user, as shown in FIGURE 22.

In addition, circuit component 140 can calculate process fluid viscosity as shall now be explained.

Circuit component 144 produces signals 137 and 138 which have the appropriate amplitudes and phases as necessary to maintain the primary vibration at a prescribed level as previously explained. Therefore by including appropriate circuitry within component 144, drive power signal 166 is produced which represents the power necessary to maintain the primary vibration level, and thus represents energy losses in the vibrating system.

One method of determining this power using component 144, is to measure the primary drive current supplied to coils 118 and 121. This current interacting with the magnetic fields of drive magnets 117 and 120 is therefore proportional to the primary drive force on flow conduit 101. Frequency and amplitude information from signal 135 can then be combined with this drive force information to produce drive power signal 166.

Since signal 166 represents the power necessary to maintain vibration level, it is functionally related to vibrational damping sources associated with the vibrating system. These sources include (a) viscous damping, functionally related to the viscosity of the fluid, (b) mechanical coupling causing vibrational energy loss to the surroundings due to vibrational imbalance, (c) acoustic coupling causing acoustic energy loss to the surroundings, (d) material damping losses from the material in flow conduit 101, and others.

Since acoustic and mechanical coupling, and material damping can be held to be negligible or constant, or can be measured, signal 166 will primarily be a function of viscous damping and thus the viscosity of the process fluid. Signal 166 can thus be used in conjunction with signals 135 and 165, by circuit component 140, to determine fluid viscosity which can then be supplied as an output to the user as shown in FIGURE 22.

Circuit component 140 can also determine user defined output signals as necessary for the user such as volumetric flow rate, scaled conversions, net flow, percentage flow, and others such as steam quality and energy flow rate.

## Claims

1. An apparatus for measuring attributes of a fluid (179), comprising:
a body insertable into and surroundable by said fluid (179), said fluid being substantially free of a circumferential component around an axis of said body;
means (190, 191), disposed within said body, for vibrating a surface (185) of said body in a radial mode of vibration, said vibrating surface (185) developing Coriolis forces within said fluid (179);
means (192, 193; 194, 195), coupled to said surface (185), for measuring motion of said surface (185), said motion being a function of Coriolis forces developed in said fluid (179); and
means (196), coupled to said measuring means, for determining an attribute of said fluid (185) as a function of said motion of said surface (185).

2. The apparatus as recited in Claim 1 wherein said vibrating means (190, 191) vibrates said surface (185) in two radial modes of vibration.

3. The apparatus as recited in Claim 1 wherein said measuring means (192, 193; 194, 195) measures a change in phase of said motion of said surface (185).

4. The apparatus as recited in Claim 1 wherein said measuring means (192, 193; 194, 195) measures a change in amplitude of said motion of said surface (185).

5. The apparatus as recited in Claim 1 wherein said body is elongated and said fluid (179) flows along a longitudinal axis of said body.

6. The apparatus as recited in Claim 1 wherein said body is elongated and said fluid (179) flows along a transverse axis of said body.

7. The apparatus as recited in Claim 1 wherein said apparatus is disposed within a conduit (252) and said fluid (179) is capable of being disposed between said apparatus and said conduit (252).

8. The apparatus as recited in Claim 1 wherein said apparatus is disposed within a conduit, said fluid (179) is capable of being disposed between said apparatus and said conduit (205) and said measuring means is coupled to said conduit (205).

9. The apparatus as recited in Claim 7 further comprising means (271-276) for vibrating said conduit (252).

10. The apparatus as recited in Claim 8 further comprising means (271-276) for sensing a change in motion of said conduit (252).

11. The apparatus as recited in Claim 1 wherein said attribute is a mass flow rate of said fluid (179).

12. The apparatus as recited in Claim 1 wherein said attribute is a pressure of said fluid (179).

13. The apparatus as recited in Claim 1 wherein said attribute is a density of said fluid (179).

14. The apparatus as recited in Claim 1 wherein said attribute is a viscosity of said fluid (179).

15. A method of measuring attributes of a fluid (179), comprising the steps of:
inserting a body into said fluid (179), said body containing means (190, 191) for vibrating a surface (185) of said body, said fluid (179) being substantially free of a circumferential component around an axis of said body;
vibrating said surface (185) of said body in a radial mode of vibration with said vibrating means, said vibrating surface (185) developing Coriolis forces within said fluid (179);
measuring motion of said surface (185) with a means (192, 193; 194, 195) for measuring coupled to said surface (185) of said body, said motion being a function of Coriolis forces developed in said fluid (179); and
determining an attribute of said fluid (179) as a function of said motion of said surface (185).

16. The method as recited in Claim 15 further comprising the step of vibrating said surface (185) in two radial modes of vibration.

17. The method as recited in Claim 15 wherein the step of measuring comprises the step of measuring a change in phase of said motion of said surface (185).

18. The method as recited in Claim 15 wherein the step of measuring comprises the step of measuring a change in amplitude of said motion of said surface (185).

19. The method as recited in Claim 15 wherein said body is elongated and said fluid (179) flows along a longitudinal axis of said body.

20. The method as recited in Claim 15 wherein said body is elongated and said fluid (179) flows along a transverse axis of said body.

21. The method as recited in Claim 15 wherein said apparatus is disposed within a conduit (252) and said fluid (179) is disposed between said apparatus and said conduit (252).

22. The method as recited in Claim 15 wherein said apparatus is disposed within a conduit (252), said fluid (179) is disposed between said apparatus and said conduit (252) and said means (271-276) for measuring is coupled to said conduit (252).

23. The method as recited in Claim 22 further comprising means (271-276) for vibrating said conduit (252).

24. The method as recited in Claim 23 further comprising means for sensing a change in motion of said conduit (252).

25. The method as recited in Claim 15 wherein said attribute is a mass flow rate of said fluid (179).

26. The method as recited in Claim 15 wherein said attribute is a pressure of said fluid (179).

27. The method as recited in Claim 15 wherein said attribute is a density of said fluid (179).

28. The method as recited in Claim 15 wherein said attribute is a viscosity of said fluid (179).

29. A system for processing fluids (179), comprising:
an apparatus for measuring an attribute of a fluid (179) in a flow conduit (252), comprising:
an elongated body insertable into and surroundable by said fluid (179), said fluid (179) being substantially free of a circumferential component around an axis of said body;
means (190,191), disposed within said body, for vibrating a surface (185) of said body in a radial mode of vibration, said vibrating surface (185) developing Coriolis forces within said fluid (179);
means (192, 193; 194, 195), coupled to said surface (185), for measuring motion of said surface (185), said motion being a function of Coriolis forces developed in said fluid (179); and
means (196), coupled to said measuring means, for determining an attribute of said fluid (179) as a function of said motion of said surface (185);
a conduit (252) surrounding said apparatus, said fluid (179) disposed between said apparatus and said conduit (252) and said means for measuring coupled to said conduit (252); and
means (271-276) for vibrating said conduit (252) to thereby allow said system to measure said attribute, said attribute being selected from the group consisting of:
mass flow rate;
pressure;
density; and
viscosity of said fluid.

30. The system as recited in Claim 29 further comprises means (271-276) for sensing a change in motion of said conduit (252).

31. The system as recited in Claim 29 wherein said vibrating means vibrates said surface (185) in two radial modes of vibration.

32. The system as recited in Claim 29 wherein said measuring means measures a change in phase of said motion of said surface (185).

33. The system as recited in Claim 29 wherein said measuring means measures a change in amplitude of said motion of said surface (185).

34. The system as recited in Claim 29 wherein said fluid (179) flows along a longitudinal axis of said body.

35. The system as recited in Claim 29 wherein said fluid (179) flows along a transverse axis of said body.

## Patentansprüche

1. Vorrichtung zum Messen von Eigenschaften eines Fluids (179), umfassend:
einen Körper, der in das Fluid (179) einsetzbar ist und durch dieses umgebbar ist, wobei das Fluid im wesentlichen frei von einer Umfangskomponente um eine Achse des Körpers ist;
Mittel (190, 191), die in dem Körper angeordnet sind, um eine Oberfläche (185) des Körpers in einer radialen Art einer Vibration zu vibrieren, wobei die vibrierende Oberfläche (185) Corioliskräfte innerhalb des Fluids (179) entwickelt;
Mittel (192, 193; 194, 195), die mit der Oberfläche (185) gekoppelt sind, um eine Bewegung der Oberfläche (185) zu messen, wobei die Bewegung eine Funktion von Corioliskräften ist, die in dem Fluid (179) entwickelt sind; und
Mittel (196), die mit den Meßmitteln gekoppelt sind, um eine Eigenschaft des Fluids (185) als eine Funktion der Bewegung der Oberfläche (185) zu bestimmen.

2. Vorrichtung nach Anspruch 1, worin die Vibrationsmittel (190, 191) die Oberfläche (185) in zwei radialen Arten einer Vibration vibrieren.

3. Vorrichtung nach Anspruch 1, worin die Meßmittel (192, 193; 194, 195) eine Änderung in der Phase der Bewegung der Oberfläche (185) messen.

4. Vorrichtung nach Anspruch 1, worin die Meßmittel (192, 193; 194, 195) eine Änderung in der Amplitude der Bewegung der Oberfläche (185) messen.

5. Vorrichtung nach Anspruch 1, worin der Körper länglich ist und das Fluid (179) entlang einer Längsachse des Körpers fließt bzw. strömt.

6. Vorrichtung nach Anspruch 1, worin der Körper länglich ist und das Fluid (179) entlang einer Querachse des Körpers fließt.

7. Vorrichtung nach Anspruch 1, worin die Vorrichtung innerhalb einer Leitung (252) angeordnet ist und das Fluid (179) fähig ist, zwischen der Vorrichtung und der Leitung (252) angeordnet zu sein.

8. Vorrichtung nach Anspruch 1, worin die Vorrichtung in einer Leitung angeordnet ist, wobei das Fluid (179) fähig ist, zwischen der Vorrichtung und der Leitung (205) angeordnet zu sein und das Meßmittel mit der Leitung (205) gekoppelt ist.

9. Vorrichtung nach Anspruch 7, weiters umfassend Mittel (271 - 276) zum Vibrieren der Leitung (252).

10. Vorrichtung nach Anspruch 8, weiters umfassend Mittel (271 - 276) zum Abtasten bzw. Erfassen einer Änderung in der Bewegung der Leitung (252).

11. Vorrichtung nach Anspruch 1, worin die Eigenschaft eine Massenströmungsrate bzw. ein Mengen- bzw. Massendurchsatz des Fluids (179) ist.

12. Vorrichtung nach Anspruch 1, worin die Eigenschaft ein Druck des Fluids (179) ist.

13. Vorrichtung nach Anspruch 1, worin die Eigenschaft eine Dichte des Fluids (179) ist.

14. Vorrichtung nach Anspruch 1, worin die Eigenschaft eine Viskosität des Fluids (179) ist.

15. Verfahren zum Messen von Eigenschaften eines Fluids (179), umfassend die Schritte:
Einfügen bzw. Einbringen eines Körpers in das Fluid (179), wobei der Körper Mittel (190, 191) zum Vibrieren einer Oberfläche (185) des Körpers umfaßt, wobei das Fluid (179) im wesentlichen frei von einer Umfangskomponente um eine Achse des Körpers ist;
Vibrieren der Oberfläche (185) des Körpers in einer radialen Art einer Vibration mit den Vibrationsmitteln, wobei die Vibrationsoberfläche (185) Corioliskräfte innerhalb des Fluids (179) entwickelt;
Messen einer Bewegung der Oberfläche (185) mit Mitteln (192, 193; 194, 195) zum Messen, die mit der Oberfläche (185) des Körpers gekoppelt werden, wobei die Bewegung eine Funktion der Corioliskräfte ist, die in dem Fluid (179) entwickelt werden; und
Bestimmen einer Eigenschaft des Fluids (179) als eine Funktion der Bewegung der Oberfläche (185).

16. Verfahren nach Anspruch 15, weiters umfassend den Schritt eines Vibrierens der Oberfläche (185) in zwei radialen Arten einer Vibration.

17. Verfahren nach Anspruch 15, worin der Schritt eines Messens den Schritt eines Messens einer Phasenänderung der Bewegung der Oberfläche (185) umfaßt.

18. Verfahren nach Anspruch 15, worin der Schritt eines Messens den Schritt eines Messens einer Amplitudenänderung der Bewegung der Oberfläche (185) umfaßt.

19. Verfahren nach Anspruch 15, worin der Körper länglich ist und das Fluid (179) entlang einer Längsachse des Körpers fließt bzw. strömt.

20. Verfahren nach Anspruch 15, worin der Körper länglich ist und das Fluid (179) entlang einer Querachse des Körpers fließt.

21. Verfahren nach Anspruch 15, worin die Vorrichtung innerhalb einer Leitung (252) angeordnet wird und das Fluid (179) zwischen der Vorrichtung und der Leitung (252) angeordnet wird.

22. Verfahren nach Anspruch 15, worin die Vorrichtung in einer Leitung (252) angeordnet wird, wobei das Fluid (179) zwischen der Vorrichtung und der Leitung (252) angeordnet wird und die Mittel (271 - 276) zum Messen mit der Leitung (252) gekoppelt werden.

23. Verfahren nach Anspruch 22, weiters umfassend Mittel (271 - 276) zum Vibrieren der Leitung (252).

24. Verfahren nach Anspruch 23, weiters umfassend Mittel zum Abtasten bzw. Erfassen einer Änderung in der Bewegung der Leitung (252).

25. Verfahren nach Anspruch 15, worin die Eigenschaft eine Massenströmungsrate bzw. ein Massendurchsatz des Fluids (179) ist.

26. Verfahren nach Anspruch 15, worin die Eigenschaft ein Druck des Fluids (179) ist.

27. Verfahren nach Anspruch 15, worin die Eigenschaft eine Dichte des Fluids (179) ist.

28. Verfahren nach Anspruch 15, worin die Eigenschaft eine Viskosität des Fluids (179) ist.

29. System zum Verarbeiten von Fluiden (179), umfassend:
eine Vorrichtung zum Messen einer Eigenschaft eines Fluids (179) in einer Flußleitung (252), umfassend:
einen länglichen Körper, der in das Fluid (179) einsetzbar und durch dieses umgebbar ist, wobei das Fluid (179) im wesentlichen frei von einer Umfangskomponente um eine Achse des Körpers ist;
Mittel (190, 191), die in dem Körper angeordnet sind, um eine Oberfläche (185) des Körpers in einer radialen Art einer Vibration zu vibrieren, wobei die Vibrationsoberfläche (185) Corioliskräfte in dem Fluid (179) entwickelt;
Mittel (192, 193; 194, 195), die mit der Oberfläche (185) gekoppelt sind, um eine Bewegung der Oberfläche (185) zu messen, wobei die Bewegung eine Funktion von Corioliskräften ist, die in dem Fluid (179) entwickelt sind; und
Mittel (196), die mit den Meßmitteln gekoppelt sind, um eine Eigenschaft des Fluids (179) als eine Funktion der Bewegung der Oberfläche (185) zu bestimmen;
eine Leitung (252), die die Vorrichtung umgibt, wobei das Fluid (179) zwischen der Vorrichtung und der Leitung (252) angeordnet ist und die Mittel zum Messen mit der Leitung (252) gekoppelt sind; und
Mittel (271 - 276) zum Vibrieren der Leitung (252), um es dadurch dem System zu ermöglichen, die Eigenschaft zu messen, wobei die Eigenschaft gewählt aus der Gruppe bestehend aus:
Massenströmungsrate bzw. Massendurchsatz,
Druck,
Dichte und
Viskosität des Fluids.

30. System nach Anspruch 29, weiters umfassend Mittel (271 - 276) zum Abtasten bzw. Erfassen einer Änderung in der Bewegung der Leitung (252).

31. System nach Anspruch 29, worin die Vibrationsmittel die Oberfläche (185) in zwei radialen Arten einer Vibration vibrieren.

32. System nach Anspruch 29, worin die Meßmittel eine Änderung in der Phase der Bewegung der Oberfläche (185) messen.

33. System nach Anspruch 29, worin die Meßmittel eine Änderung in der Amplitude der Bewegung der Oberfläche (185) messen.

34. System nach Anspruch 29, worin das Fluid (179) entlang einer Längsachse des Körpers fließt bzw. strömt.

35. System nach Anspruch 29, worin das Fluid (179) entlang einer Querachse des Körpers fließt.

## Revendications

1. Dispositif pour mesurer des attributs d'un fluide (179), comportant :
un corps pouvant être inséré dans ledit fluide (179) et pouvant être entouré par celui-ci, ledit fluide étant sensiblement sans composante circonférentielle autour d'un axe dudit corps,
des moyens (190, 191) disposés dans ledit corps, pour faire vibrer une surface (185) dudit corps dans un mode de vibration radiale, ladite surface vibrante (185) développant des forces de Coriolis dans ledit fluide (179),
des moyens (192, 193 ; 194, 195), reliés à ladite surface (185), pour mesurer le mouvement de ladite surface (185), ledit mouvement étant fonction des forces de Coriolis développées dans ledit fluide (179), et
des moyens (196), reliés auxdits moyens de mesure, pour déterminer un attribut dudit fluide (185) en fonction dudit mouvement de ladite surface (185).

2. Dispositif selon la revendication 1, dans lequel lesdits moyens vibrants (190, 191) font vibrer ladite surface (185) dans deux modes de vibration radiaux.

3. Dispositif selon la revendication 1, dans lequel lesdits moyens de mesure (192, 193 ; 194, 195) mesurent un changement de phase dudit mouvement de ladite surface (185).

4. Dispositif selon la revendication 1, dans lequel lesdits moyens de mesure (192, 193 ; 194, 195) mesurent un changement d'amplitude dudit mouvement de ladite surface (185).

5. Dispositif selon la revendication 1, dans lequel ledit corps est allongé et ledit fluide (179) s'écoule le long d'un axe longitudinal dudit corps.

6. Dispositif selon la revendication 1, dans lequel ledit corps est allongé et ledit fluide (179) s'écoule le long d'un axe transversal dudit corps.

7. Dispositif selon la revendication 1, dans lequel ledit dispositif est disposé dans une conduite (252) et ledit fluide (179) peut être disposé entre ledit dispositif et ladite conduite (252).

8. Dispositif selon la revendication 1, dans lequel ledit dispositif est disposé dans une conduite, ledit fluide (179) peut être disposé entre ledit dispositif et ladite conduite (205) et lesdits moyens de mesure sont reliés à ladite conduite (205).

9. Dispositif selon la revendication 7, comportant de plus des moyens (271 à 276) pour faire vibrer ladite conduite (252).

10. Dispositif selon la revendication 8, comportant de plus des moyens (271 à 276) pour détecter un changement de mouvement de ladite conduite (252).

11. Dispositif selon la revendication 1, dans lequel ledit attribut est un débit massique dudit fluide (179).

12. Dispositif selon la revendication 1, dans lequel ledit attribut est une pression dudit fluide (179).

13. Dispositif selon la revendication 1, dans lequel ledit attribut est une densité dudit fluide (179).

14. Dispositif selon la revendication 1, dans lequel ledit attribut est une viscosité dudit fluide (179).

15. Procédé de mesure d'attributs d'un fluide (179), comportant les étapes consistant à :
insérer un corps dans ledit fluide (179), ledit corps contenant des moyens (190, 191) pour faire vibrer une surface (185) dudit corps, ledit fluide (179) étant sensiblement sans composante circonférentielle autour d'un axe dudit corps,
faire vibrer la surface (185) dudit corps dans un mode de vibration radiale à l'aide desdits moyens faisant vibrer, ladite surface vibrante (185) développant des forces de Coriolis dans ledit fluide (179),
mesurer le mouvement de ladite surface (185) avec des moyens (192, 193 ; 194, 195) de mesure reliés à ladite surface (185) dudit corps, ledit mouvement étant fonction des forces de Coriolis développées dans ledit fluide (179), et
déterminer un attribut dudit fluide (179) en fonction dudit mouvement de ladite surface (185).

16. Procédé selon la revendication 15, comportant de plus l'étape consistant à faire vibrer ladite surface (185) dans deux modes de vibration radiaux.

17. Procédé selon la revendication 15, dans lequel l'étape de mesure comporte l'étape consistant à mesurer un changement de phase dudit mouvement de ladite surface (185).

18. Procédé selon la revendication 15, dans lequel l'étape de mesure comporte l'étape consistant à mesurer un changement d'amplitude dudit mouvement de ladite surface (185).

19. Procédé selon la revendication 15, dans lequel ledit corps est allongé et ledit fluide (179) s'écoule le long d'un axe longitudinal dudit corps.

20. Procédé selon la revendication 15, dans lequel ledit corps est allongé et ledit fluide (179) s'écoule le long d'un axe transversal dudit corps.

21. Procédé selon la revendication 15, dans lequel ledit dispositif est disposé dans une conduite (252) et ledit fluide (179) est disposé entre ledit dispositif et ladite conduite (252).

22. Procédé selon la revendication 15, dans lequel ledit dispositif est disposé dans une conduite (252), ledit fluide (179) est disposé entre ledit dispositif et ladite conduite (252) et lesdits moyens de mesure (271 à 276) sont reliés à ladite conduite (252).

23. Procédé selon la revendication 22, comportant de plus des moyens (271 à 276) pour faire vibrer ladite conduite (252).

24. Procédé selon la revendication 23, comportant de plus des moyens de détection d'un changement de mouvement de ladite conduite (252).

25. Procédé selon la revendication 15, dans lequel ledit attribut est un débit massique dudit fluide (179).

26. Procédé selon la revendication 15, dans lequel ledit attribut est une pression dudit fluide (179).

27. Procédé selon la revendication 15, dans lequel ledit attribut est une densité dudit fluide (179).

28. Procédé selon la revendication 15, dans lequel ledit attribut est une viscosité dudit fluide (179).

29. Système de traitement de fluides (179), comportant
un dispositif pour mesurer un attribut d'un fluide (179) dans une conduite d'écoulement (252), comportant :
un corps allongé pouvant être inséré dans ledit fluide (179) et pouvant être entouré par celui-ci, ledit fluide (179) étant sensiblement sans composante circonférentielle autour d'un axe dudit corps,
des moyens (190, 191) disposés dans ledit corps, pour faire vibrer une surface (185) dudit corps dans un mode de vibration radiale, ladite surface vibrante (185) développant des forces de Coriolis dans ledit fluide (179),
des moyens (192, 193 ; 194, 195), couplés à ladite surface (185), pour mesurer un mouvement de ladite surface (185), ledit mouvement étant fonction des forces de Coriolis développées dans ledit fluide (179), et
des moyens (196), couplés auxdits moyens de mesure, pour déterminer un attribut dudit fluide (179) en fonction dudit mouvement de ladite surface (185),
une conduite (252) entourant ledit dispositif, ledit fluide (179) étant disposé entre ledit dispositif et ladite conduite (252) et lesdits moyens de mesure étant reliés à ladite conduite (252), et
des moyens (271 à 276) pour faire vibrer ladite conduite (252) pour permettre ainsi audit système de mesurer ledit attribut, ledit attribut étant sélectionné parmi le groupe constitué de :
un débit massique,
une pression,
une densité, et
une viscosité dudit fluide.

30. Système selon la revendication 29, comportant de plus des moyens (271 à 276) pour détecter un changement de mouvement de ladite conduite (252).

31. Système selon la revendication 29, dans lequel lesdits moyens faisant vibrer mettent en vibration ladite surface (185) dans deux modes de vibration radiaux.

32. Système selon la revendication 29, dans lequel lesdits moyens de mesure mesurent un changement de phase dudit mouvement de ladite surface (185).

33. Système selon la revendication 29, dans lequel lesdits moyens de mesure mesurent un changement d'amplitude dudit mouvement de ladite surface (185).

34. Système selon la revendication 29, dans lequel ledit fluide (179) s'écoule le long d'un axe longitudinal dudit corps.

35. Système selon la revendication 29, dans lequel ledit fluide (179) s'écoule le long d'un axe transversal dudit corps.
